(19) **Europäisches Patentamt / European Patent Office / Office européen des brevets**

(11) **EP 3 985 509 B1**

(12) **EUROPEAN PATENT SPECIFICATION**

(45) Date of publication and mention
of the grant of the patent:
**26.02.2025 Bulletin 2025/09**

(21) Application number: **19938547.7**

(22) Date of filing: **26.12.2019**

(51) International Patent Classification (IPC):
**G06F 9/50** (2006.01)  **G06F 9/48** (2006.01)
**G06N 3/063** (2023.01)  **G06N 3/04** (2023.01)

(52) Cooperative Patent Classification (CPC):
**G06N 3/063; G06F 9/5022; G06F 9/5038;**
**G06N 3/04**

(86) International application number:
**PCT/CN2019/128915**

(87) International publication number:
**WO 2021/012609 (28.01.2021 Gazette 2021/04)**

(54) **NEURAL NETWORK SEGMENTATION METHOD, PREDICTION METHOD, AND RELATED APPARATUS**

VERFAHREN ZUR SEGMENTIERUNG EINES NEURONALEN NETZES, VERFAHREN ZUR VORHERSAGE UND ZUGEHÖRIGE VORRICHTUNG

PROCÉDÉ DE SEGMENTATION DE RÉSEAU NEURONAL, PROCÉDÉ DE PRÉDICTION ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2019 PCT/CN2019/097501**

(43) Date of publication of application:
**20.04.2022 Bulletin 2022/16**

(73) Proprietor: **Huawei Technologies Co., Ltd.**
**Longgang District**
**Shenzhen,**
**Guangdong 518129 (CN)**

(72) Inventors:
• **CHU, Jieyu**
  **Shenzhen, Guangdong 518129 (CN)**
• **YE, Dezhou**
  **Shenzhen, Guangdong 518129 (CN)**
• **HU, Yuzhou**
  **Shenzhen, Guangdong 518129 (CN)**

(74) Representative: **Thun, Clemens et al**
**Mitscherlich PartmbB**
**Patent- und Rechtsanwälte**
**Karlstraße 7**
**80333 München (DE)**

(56) References cited:
**WO-A1-2018/135515**    **CN-A- 108 292 241**
**CN-A- 108 351 805**    **US-A1- 2019 042 917**

• **XING YU ET AL: "DNNVM: End-to-End Compiler Leveraging Heterogeneous Optimizations on FPGA-Based CNN Accelerators", IEEE TRANSACTIONS ON COMPUTER-AIDED DESIGN OF INTEGRATED CIRCUITS AND SYSTEMS, IEEE, USA, vol. 39, no. 10, 23 July 2019 (2019-07-23), pages 2668 - 2681, XP011811065, ISSN: 0278-0070, [retrieved on 20200922], DOI: 10.1109/TCAD.2019.2930577**
• **SHAWAHNA AHMAD ET AL: "FPGA-Based Accelerators of Deep Learning Networks for Learning and Classification: A Review", IEEE ACCESS, vol. 7, 23 January 2019 (2019-01-23), pages 7823 - 7859, XP011706385, DOI: 10.1109/ ACCESS.2018.2890150**

EP 3 985 509 B1

## Description

### TECHNICAL FIELD

This application relates to the field of artificial intelligence, and in particular, to a neural network tiling method, a prediction method, and a related apparatus.

### BACKGROUND

Artificial intelligence (AI) is a theory, a method, a technology, or an application system that simulates, extends, and expands human intelligence by using a digital computer or a machine controlled by the digital computer, to perceive an environment, obtain knowledge, and achieve an optimal result based on the knowledge. In other words, artificial intelligence is a branch of computer science, and is intended to understand essence of intelligence and produce a new intelligent machine that can react in a manner similar to human intelligence. Artificial intelligence is to study design principles and implementation methods of various intelligent machines, so that the machines have perceiving, inference, and decision-making functions. Researches in the field of artificial intelligence include robots, natural language processing, computer vision, decision-making and inference, human-machine interaction, recommendation and search, AI basic theories, and the like. Machine learning is a main manner of implementing artificial intelligence.

In the field of machine learning and cognitive science, a neural network (NN for short) or an artificial neural network is a mathematical model or calculation model that mimics a structure and a function of a biological neural network (which is a central nervous system, especially a brain, of an animal), and is configured to estimate or approximate a function. The neural network performs calculation by a large quantity of artificial neuron connections. Currently, there are mainly two methods for calculating the neural network: (1) a graphics processing unit (GPU); and (2) an application-specific integrated circuit (ASIC). However, regardless of the GPU or the ASIC, a conventional technical solution in which the neural network is used to process a processing task is as follows: A single vertex (that is, a neuron) in the neural network is used as a basic unit to perform calculation layer-by-layer. Because calculation result data of the single vertex in the neural network is usually relatively large and cannot be stored into on-chip storage, a calculation result needs to be exported to off-chip storage. Therefore, the off-chip storage needs to be accessed to store an output result of the single vertex in the neural network. Because a quantity of vertices in the neural network is usually relatively large, the off-chip storage needs to be frequently accessed in a calculation process of the neural network. When the off-chip storage is frequently accessed, calculation performance is limited due to a bandwidth of the off-chip storage to a specific extent and system power consumption is high.

The document Xing Yu et al.: "DNNVM: End-to-End Compiler Leveraging Heterogeneous Optimizations on FPGA-Based CNN Accelerators", XP 011811065 shows a tiling of neural networks.

### SUMMARY

The present application is defined by the independent claims. Dependent claims contain further advantageous developments.

Embodiments of this application provide a neural network tiling method, a prediction method, and a related apparatus. A neural network graph is tiled to obtain a depth subgraph, so as to generate a depth subnetwork. The depth subnetwork does not need to access an external memory in a process of performing a processing operation, so as to effectively decrease a quantity of times of accessing the external memory or even avoid accessing the external memory.

The method is executed by a neural network tiling apparatus, and the neural network tiling apparatus may be a terminal such as a server or a mobile phone, and another computer device. In actual application, the neural network tiling apparatus may tile a neural network graph to obtain one or more depth subgraphs, so as to generate one or more depth subnetworks based on the one or more depth subgraphs. The neural network graph represents a neural network, and essence of tiling the neural network graph is tiling the neural network. These depth subnetworks may be understood as subnetworks obtained by tiling the neural network, that is, each depth subnetwork includes a part of vertices in the neural network. The tiling of the neural network described herein is only logical tiling. To be specific, only a procedure in which each vertex in the neural network processes input data of the vertex and a data reading and writing procedure are adjusted, instead of tiling the neural network into several parts. Vertices included in a tiled neural network (that is, these depth subnetworks) are vertices in the neural network, and a processing operation implemented by each vertex does not change. The neural network is configured to execute a target task, and each depth subnetwork is configured to execute a subtask included in the target task. It can be understood that these depth subnetworks can implement the target task. For example, a reference prediction result may be obtained by inputting reference input data to the neural network for prediction processing. The reference prediction result is also obtained by inputting the reference input data, for processing, to the one or more depth subnetworks obtained by tiling the neural network. In other words, a processing operation implemented by using the depth subnetwork obtained by tiling the neural network is the same as a processing operation implemented by the neural network. The depth subnetwork does not need to access an external memory in a process of processing input data of the depth subnetwork. Therefore, when the depth subnetwork obtained by tiling the neural network is used to execute the target task, a quantity of times of accessing the external memory can be decreased or access to the external memory even can be avoided. The external memory is a memory other than the on-chip buffer. Because the quantity of times of accessing the external memory is decreased, power consumption can be further reduced when a processing task is executed by using the tiled neural network.

In this embodiment of this application, the neural network tiling apparatus tiles a neural network graph to obtain one or more depth subgraphs, so as to generate one or more depth subnetworks based on the one or more depth subgraphs. When these depth subnetworks are used to perform a processing task of the neural network, a quantity of times of accessing the external memory can be greatly decreased, and power consumption can be reduced.

In an optional manner, the method further includes: tiling the neural network graph to obtain a direct subgraph, where the direct subgraph is used to represent a direct subnetwork, a plurality of vertices included in the direct subnetwork exchange data with each other by reading and writing the on-chip buffer, the direct subnetwork is configured to process second input data as a whole to obtain second output data, and the second input data is input data of the direct subnetwork. The neural network tiling apparatus can obtain a depth subgraph and a direct subgraph by tiling the neural network graph. A depth subnetwork generated by using the depth subgraph can tile input data of the depth subgraph into at least two groups of data for successive processing, and a direct subnetwork generated by using the direct subgraph can process input data of the direct subnetwork as a whole. Because the direct subnetwork processes the input data of the direct subnetwork as a whole, each vertex in the direct subnetwork needs to perform only one processing operation, which takes short time.

In this implementation, the neural network tiling apparatus tiles the neural network graph to obtain the direct subgraph, so as to generate the direct subnetwork based on the direct subgraph. The direct subnetwork can process the input data of the direct subnetwork as a whole, thereby effectively reducing processing time.

In an optional manner, storage space required by the first input data is larger than available storage space of the on-chip buffer, storage space required by each of the at least two groups of data is not larger than the available storage space of the on-chip buffer, and storage space required by the second input data is not larger than the available storage space of the on-chip buffer.

In this implementation, in one aspect, when storage space required by input data is larger than the available storage space of the on-chip buffer, the input data is tiled into at least two groups of data for successive processing, so that storage space required by each group of data is not larger than the available storage space of the on-chip buffer, thereby avoiding accessing the external memory. In another aspect, when the storage space required by the input data is not larger than the available storage space of the on-chip buffer, the input data is processed as a whole, so that processing time can be reduced while the external memory is not accessed.

In an optional manner, each of the plurality of vertices included in the depth subnetwork performs at least two processing operations in a process of processing the first input data, and at least one vertex in the direct subnetwork performs one processing operation in a process of processing the second input data.

In this implementation, the first input data is tiled into at least two groups for successive processing, so as to avoid accessing the external memory.

In an optional manner, the tiling the neural network graph to obtain a depth subgraph includes: obtaining a first reference subgraph, where the first reference subgraph includes a first vertex and a second vertex, the first vertex is a current to-be-allocated vertex in the neural network graph, and the second vertex is a next vertex of the first vertex in the neural network graph; adding a third vertex to the first reference subgraph to obtain a second reference subgraph, where the third vertex is a next vertex of the second vertex in the neural network graph, and the second reference subgraph is used to process third input data; allocating an address of the on-chip buffer to the second reference subgraph in a process in which the second reference subgraph processes the third input data; and when the address of the on-chip buffer is successfully allocated to the second reference subgraph and the third vertex is an end vertex, using the second reference subgraph as the depth subgraph. A reference subgraph is a subgraph that is not determined as the depth subgraph or the direct subgraph and includes at least one vertex, and start vertex in the subgraph is a current to-be-allocated vertex in the neural network graph. The reference subgraph is a subgraph that includes a current to-be-allocated vertex in the neural network graph or includes a current to-be-allocated vertex in the neural network graph and a next vertex of the to-be-allocated vertex. In a procedure of a neural network graph tiling method, the neural network graph tiling apparatus may add one or more unallocated vertices in the neural network graph based on a reference subgraph to obtain a direct subgraph or a depth subgraph; and after obtaining one direct subgraph or one depth subgraph, the neural network graph tiling apparatus adds one or more unallocated vertices in the neural network graph based on another reference subgraph (a subgraph including a current to-be-allocated vertex in the neural network graph, or a subgraph including a current to-be-allocated vertex in the neural network graph and a next vertex of the to-be-allocated vertex) to obtain a new direct subgraph or a new depth subgraph. It can be understood that each reference subgraph includes a current to-be-allocated vertex in the neural network graph, and a direct subgraph or a depth subgraph can be obtained based on each reference subgraph.

In this implementation, the neural network tiling apparatus can quickly and accurately generate a depth subgraph based on a result of allocating the address of the on-chip buffer and whether a vertex is an end vertex.

In an optional manner, after the allocating an address of the on-chip buffer to the second reference subgraph, the method further includes: when the address of the on-chip buffer fails to be allocated to the second reference subgraph, using the first reference subgraph as the direct subgraph.

A case in which the address of the on-chip buffer fails to be allocated to the second reference subgraph includes the following: The address of the on-chip buffer fails to be allocated to the second reference subgraph in a process in which at least two groups of data obtained by tiling the third input data are successively processed. That the address of the on-chip buffer cannot be successfully allocated to the second reference subgraph means that the second reference subgraph cannot be used as the depth subgraph. In this implementation, when the address of the on-chip buffer fails to be successfully allocated to the second reference subgraph, the first reference subgraph is used as the direct subgraph, thereby avoiding generating a wrong depth subgraph.

In an optional manner, the allocating an address of the on-chip buffer to the second reference subgraph includes: determining whether the address of the on-chip buffer is successfully allocated to the second reference subgraph in a process in which the second reference subgraph processes the third input data as a whole; and when the address of the on-chip buffer fails to be allocated to the second reference subgraph, allocating the address of the on-chip buffer to the second reference subgraph in a process in which the second reference subgraph successively processes at least two groups of data obtained by tiling the third input data.

In this implementation, if the address of the on-chip buffer is successfully allocated to the second reference subgraph in the process in which the second reference subgraph processes the third input data as a whole, a subsequent operation does not need to be performed, thereby reducing operations.

After the tiling the neural network graph to obtain a depth subgraph, the method further includes: when a quantity of vertices included in the depth subgraph is not less than a first threshold, tiling the depth subgraph to obtain a first second-order subgraph and a second second-order subgraph, where the first second-order subgraph is used to represent a first second-order subnetwork, the second second-order subgraph is used to represent a second second-order subnetwork, both the first second-order subnetwork and the second second-order subnetwork are included in the depth subnetwork, and vertices included in the first second-order subnetwork are all different from vertices included in the second second-order subnetwork.

The first threshold may be 5, 6, 7, 8, or the like. This is not limited in this embodiment of this application. The first second-order subgraph and the second second-order subgraph are subgraphs obtained by tiling the depth subgraph. The first second-order subnetwork and the second second-order subnetwork may be understood as two subnetworks obtained by tiling the depth subnetwork. For example, one of the first second-order subgraph and the second second-order subgraph is a direct subgraph, and the other one is a depth subgraph. In other words, a new depth subgraph and a new direct subgraph may be obtained by tiling a depth subgraph that includes vertices whose quantity is not less than the first threshold. For example, both the first second-order subgraph and the second second-order subgraph are depth subgraphs. In other words, two new depth subgraphs may be obtained by tiling a depth subgraph that includes vertices whose quantity is not less than the first threshold. For example, a depth subgraph includes a vertex 1, a vertex 2, a vertex 3, a vertex 4, a vertex 5, and a vertex 6. The depth subgraph is tiled to obtain a depth subgraph including the vertex 1, the vertex 2, and the vertex 3, and a depth subgraph including the vertex 4, the vertex 5, and the vertex 6. For example, both the first second-order subgraph and the second second-order subgraph are direct subgraphs. In other words, two new direct subgraphs may be obtained by tiling a depth subgraph that includes vertices whose quantity is not less than the first threshold. In some embodiments, the neural network tiling apparatus first tiles the neural network graph to obtain at least one depth subgraph, and then tiles a depth subgraph that is in the at least one depth subgraph and that includes vertices whose quantity is not less than the first threshold, so that a quantity of vertices included in each depth subgraph is less than the first threshold. It can be understood that a larger quantity of vertices included in a depth subnetwork indicates a larger repeated calculation amount of the depth subnetwork. The repeated calculation amount can be effectively reduced by decreasing a quantity of vertices included in a depth subnetwork.

In this implementation, a depth subgraph that includes vertices whose quantity is not less than the first threshold is tiled, so that a quantity of depth subgraphs that include vertices whose quantity exceeds the first threshold can be decreased, thereby reducing a repeated calculation amount of a depth subnetwork generated based on the depth subgraph.

In an optional manner, a plurality of vertices included in the first second-order subnetwork exchange data with each other by reading and writing the on-chip buffer, and a plurality of vertices included in the second second-order subnetwork exchange data with each other by reading and writing the on-chip buffer.

In this implementation, a quantity of times of accessing the external memory can be decreased, thereby reducing power consumption.

Input data of the first second-order subnetwork is the first input data, output data of the second second-order subnetwork is the first output data, the first second-order subnetwork is configured to store, into a middle buffer, first intermediate data obtained by processing the first input data, the second second-order subnetwork is configured to process the first intermediate data obtained from the middle buffer, and the middle buffer is not the on-chip buffer.

The middle buffer is an external buffer whose reading and writing speed is lower than the on-chip buffer and whose reading and writing speed is higher than the external memory. In other words, performance of the middle buffer is between performance of the on-chip buffer and performance of the external memory, reading and writing performance of the middle buffer is better than the external memory but lower than the on-chip buffer, and storage space of the middle buffer is smaller than storage space of the external memory but larger than storage space of the on-chip buffer.

In this implementation, the middle buffer temporarily stores output data of the first second-order subnetwork, so as to decrease a quantity of depth subgraphs that include vertices whose quantity exceeds the first threshold.

The middle buffer is an off-chip buffer whose reading and writing speed is lower than the on-chip buffer.

In an optional manner, after the tiling the depth subgraph to obtain a first second-order subgraph and a second second-order subgraph, the method further includes: when the second second-order subnetwork is configured to process the first intermediate data as a whole, combining the second second-order subgraph and a first direct subgraph to obtain a second direct subgraph, where the first direct subgraph is used to represent a first direct subnetwork, input data of the first direct subnetwork is the first output data that is output by the second second-order subnetwork, the first direct subnetwork is configured to process the first output data as a whole to obtain third output data, the second direct subgraph is used to represent a second direct subnetwork, and the second direct subnetwork is configured to process the first intermediate data as a whole to obtain the third output data.

In this implementation, two neighboring direct subgraphs are combined into one direct subgraph, so that the two neighboring direct subgraphs are used as a whole to generate a corresponding instruction.

In an optional implementation, the tiling the depth subgraph to obtain a first second-order subgraph and a second second-order subgraph includes: determining at least one reference vertex that is in a plurality of vertices included in the depth subgraph and whose output data needs to occupy storage space smaller than available storage space of the middle buffer; and tiling the depth subgraph by using an output of an intermediate vertex in the at least one reference vertex as a tiling point to obtain the first second-order subgraph and the second second-order subgraph, where the intermediate vertex is any reference vertex in the at least one reference vertex, output data of the intermediate vertex is output data of the first second-order subgraph and is input data of the second second-order subgraph.

In this implementation, one depth subgraph can be quickly tiled into two second-order subgraphs, and it can be ensured that output data of a subnetwork represented by the first second-order subgraph can be stored into the middle buffer.

In an optional implementation, before the tiling the depth subgraph by using an output of an intermediate vertex in the at least one reference vertex as a tiling point to obtain the first second-order subgraph and the second second-order subgraph, the method further includes: obtaining a depth difference between two second-order subgraphs that are obtained by tiling the depth subgraph by separately using an output of the at least one reference vertex as a tiling point, to obtain at least one depth difference, where the at least one reference vertex is in a one-to-one correspondence with the at least one depth difference; and determining that the output of the intermediate vertex that is in the at least one reference vertex and that corresponds to a depth difference less than a depth difference threshold is used as a tiling point to tile the depth subgraph. Optionally, it is determined that the output of the intermediate vertex that is in the at least one reference vertex and that corresponds to a minimum depth difference is used as a tiling point to tile the depth subgraph. The depth difference threshold may be 1, 2, 3, or the like. A depth of a subgraph may be a quantity of vertices included in the subgraph. In this implementation, the depth subgraph can be quickly tiled into two second-order subgraphs between which a depth difference is less than the depth difference threshold.

In an optional manner, after the tiling the neural network graph to obtain a depth subgraph, the method further includes: generating a target instruction corresponding to the depth subgraph, where the target instruction is used to execute a target subtask, the neural network is configured to execute a target task, and the target subtask is a part of the target task.

In this implementation, the target instruction corresponding to the depth subgraph is generated, so that the target subtask can be implemented by executing the target instruction.

According to a second aspect, an embodiment of this application provides a neural network-based prediction method. The method may include: obtaining original input data, where the original input data includes one or more signals that can be processed by a computer; inputting the original input data to a neural network for prediction processing to obtain a prediction result, where the prediction processing includes: successively inputting, to a depth subnetwork for processing, at least two groups of data obtained by tiling first input data, where the depth subnetwork is included in the neural network and includes a part of vertices in the neural network, each vertex represents a calculation unit in the neural network, and a plurality of vertices included in the depth subnetwork exchange data with each other by reading and writing an on-chip buffer, and the first input data is obtained in the process of inputting the original input data to the neural network for prediction processing; and outputting the prediction result.

In this embodiment of this application, in the process of inputting the original input data to the neural network for prediction processing, the depth subnetwork is used to execute a processing task of the neural network. Because the depth subnetwork does not need to access an external memory in a process of processing input data of the depth subnetwork, a quantity of times of accessing the external memory can be greatly decreased, and power consumption can be reduced.

In an optional manner, the prediction processing further includes: processing, by a direct subnetwork, second input data as a whole, where the direct subnetwork is included in the neural network and includes a part of vertices in the neural network, and the second input data is obtained in the process of inputting the original input data to the neural network for prediction processing.

In this implementation, the direct subnetwork processes the input data of the direct subnetwork as a whole, so that a processing speed is fast.

In an optional manner, storage space required by the second input data is not larger than available storage space of the on-chip buffer.

In this implementation, when storage space required by input data is not larger than the available storage space of the on-chip buffer, the input data is processed as a whole, so that processing time can be reduced while the external memory is not accessed.

In an optional manner, at least one vertex in the direct subnetwork performs one processing operation in a process of processing the second input data.

In this implementation, processing time can be reduced.

In an optional manner, storage space required by the first input data is larger than the available storage space of the on-chip buffer, and storage space required by each of the at least two groups of data is not larger than the available storage space of the on-chip buffer.

In this implementation, when storage space required by input data is larger than the available storage space of the on-chip buffer, the input data is tiled into at least two groups of data for successive processing, so that storage space required by each group of data is not larger than the available storage space of the on-chip buffer, thereby avoiding accessing the external memory.

In an optional manner, each of the plurality of vertices included in the depth subnetwork performs at least two processing operations in a process of processing the first input data.

In this implementation, each vertex in the depth subnetwork successively performs at least two processing operations, so as to avoid accessing the external memory.

In an optional manner, an off-chip memory does not need to be accessed in the process of inputting the original input data to the neural network for prediction processing to obtain the prediction result.

In an optional manner, the plurality of signals that can be processed by a computer include at least one of a voice signal, a text signal, or an image signal.

According to a third aspect, an embodiment of this application provides a neural network graph tiling apparatus, and the apparatus includes a memory and a processor. The memory is configured to store code. The processor is configured to perform the following operations by reading the code stored in the memory: obtaining a neural network graph, where the neural network graph is used to represent a neural network, the neural network graph includes a plurality of vertices, and each vertex represents a calculation unit in the neural network; and tiling the neural network graph to obtain a depth subgraph, where the depth subgraph is used to represent a depth subnetwork, a plurality of vertices included in the depth subnetwork exchange data with each other by reading and writing an on-chip buffer, the depth subnetwork is configured to successively process at least two groups of data obtained by tiling first input data, to obtain first output data, the first input data is input data of the depth subnetwork, and the first input data includes one or more signals that can be processed by a computer.

In an optional manner, the processor is further configured to tile the neural network graph to obtain a direct subgraph, where the direct subgraph is used to represent a direct subnetwork, a plurality of vertices included in the direct subnetwork exchange data with each other by reading and writing the on-chip buffer, the direct subnetwork is configured to process second input data as a whole to obtain second output data, and the second input data is input data of the direct subnetwork.

In an optional manner, storage space required by the first input data is larger than available storage space of the on-chip buffer, storage space required by each of the at least two groups of data is not larger than the available storage space of the on-chip buffer, and storage space required by the second input data is not larger than the available storage space of the on-chip buffer.

In an optional manner, each of the plurality of vertices included in the depth subnetwork performs at least two processing operations in a process of processing the first input data, and at least one vertex in the direct subnetwork performs one processing operation in a process of processing the second input data.

In an optional manner, the processor is specifically configured to: obtain a first reference subgraph, where the first reference subgraph includes a first vertex and a second vertex, the first vertex is a current to-be-allocated vertex in the neural network graph, and the second vertex is a next vertex of the first vertex in the neural network graph; add a third vertex to the first reference subgraph to obtain a second reference subgraph, where the third vertex is a next vertex of the second vertex in the neural network graph, and the second reference subgraph is used to process third input data; determine whether an on-chip address manager successfully allocates an address of the on-chip buffer to the second reference subgraph in a process in which the second reference subgraph processes the third input data; and when the address of the on-chip buffer is successfully allocated to the second reference subgraph and the third vertex is an end vertex, use the second reference subgraph as the depth subgraph.

In an optional manner, the processor is further configured to: when the address of the on-chip buffer fails to be allocated to the second reference subgraph, use the first reference subgraph as the direct subgraph.

In an optional manner, the on-chip address manager is specifically configured to allocate the address of the on-chip buffer to the second reference subgraph in a process in which the second reference subgraph processes the third input data as a whole. The processor is specifically configured to: when the on-chip address manager fails to allocate the address of the on-chip buffer to the second reference subgraph, allocate the address of the on-chip buffer to the second reference subgraph in a process in which the second reference subgraph successively processes at least two groups of data obtained by tiling the third input data.

In an optional manner, the processor is further configured to generate a target instruction corresponding to the depth subgraph, where the target instruction is used to execute a target subtask, the neural network is configured to execute a target task, and the target subtask is a part of the target task.

According to a fourth aspect, an embodiment of this application provides a data processing apparatus, and the data processor apparatus includes a memory and a processor. The memory is configured to store code and original input data. The processor is configured to perform the following operations by reading the code stored in the memory: obtaining the original input data, where the original input data includes one or more signals that can be processed by a computer; and inputting the original input data to a neural network for prediction processing to obtain a prediction result, where the prediction processing includes: successively inputting, to a depth subnetwork for processing, at least two groups of data obtained by tiling first input data, where the depth subnetwork is included in the neural network and includes a part of vertices in the neural network, each vertex represents a calculation unit in the neural network, and a plurality of vertices included in the depth subnetwork exchange data with each other by reading and writing an on-chip buffer, the first input data is obtained in the process of inputting the original input data to the neural network for prediction processing; and outputting the prediction result.

In an optional manner, the prediction processing further includes: processing, by a direct subnetwork, second input data as a whole, where the direct subnetwork is included in the neural network and includes a part of vertices in the neural network, and the second input data is obtained in the process of inputting the original input data to the neural network for prediction processing.

In an optional manner, storage space required by the second input data is not larger than available storage space of the on-chip buffer.

In an optional manner, at least one vertex in the direct subnetwork performs one processing operation in a process of processing the second input data.

In an optional manner, storage space required by the first input data is larger than the available storage space of the on-chip buffer, and storage space required by each of the at least two groups of data is not larger than the available storage space of the on-chip buffer.

In an optional manner, each of the plurality of vertices included in the depth subnetwork performs at least two processing operations in a process of processing the first input data.

In an optional manner, the processor does not need to access an off-chip memory in the process of inputting the original input data to the neural network for prediction processing to obtain the prediction result.

In an optional manner, the plurality of signals that can be processed by a computer include at least one of a voice signal, a text signal, or an image signal.

According to a fifth aspect, an embodiment of this application provides a computer-readable storage medium. The computer storage medium stores a computer program, and the computer program includes program instructions. When the program instructions are executed by a processor, the processor is enabled to perform the method according to the first aspect and the second aspect and the optional implementations.

**BRIEF DESCRIPTION OF DRAWINGS**

FIG. 1 shows a classical calculation form of a neutral network (NN) in an AI chip;
FIG. 2 shows a calculation form of a neural network in an AI chip according to an embodiment of this application;
FIG. 3A shows a framework of a neural network graph tiling processing system according to an embodiment of this application;

FIG. 3B shows a framework of another neural network graph tiling processing system according to an embodiment of this application;

FIG. 4 is a schematic diagram of a structure of a neural network graph tiling apparatus according to an embodiment of this application;

FIG. 5A and FIG. 5B are a schematic flowchart of a neural network graph tiling method according to an embodiment of this application;

FIG. 6 is a schematic diagram of a neural network graph tiling process according to an embodiment of this application;

FIG. 7A and FIG. 7B are a flowchart of a data tiling determining method according to an embodiment of this application;

FIG. 8 is a flowchart of a method for constructing a subgraph by using a Direct mode;

FIG. 9 is a flowchart of a method for constructing a subgraph by using a Depth mode;

FIG. 10 is a flowchart of a data tiling method according to an embodiment of this application;

FIG. 11A is a schematic diagram of three groups of data obtained by tiling input data;

FIG. 11B is a schematic diagram of output data;

FIG. 12A and FIG. 12B are a flowchart of an on-chip storage allocation method according to an embodiment of this application;

FIG. 13 shows a procedure of a method for releasing storage space of an on-chip buffer according to an embodiment of this application;

FIG. 14 shows a procedure of an on-chip address allocation method according to an embodiment of this application;

FIG. 15A and FIG. 15B are a flowchart of another on-chip address allocation method according to an embodiment of this application;

FIG. 16A shows a calculation form based on on-chip single-level storage in an AI chip according to an embodiment of this application;

FIG. 16B shows a calculation form based on multi-level storage in an AI chip according to an embodiment of this application;

FIG. 17 is a schematic diagram of an optimal discrete block according to an embodiment of this application.

FIG. 18 is a schematic diagram of a structure of another neural network graph tiling apparatus according to an embodiment of this application;

FIG. 19 is a schematic diagram of comparison between a neural network before optimization and a neural network after optimization;

FIG. 20 is a schematic diagram of optimizing on-chip storage by a Concat vertex according to an embodiment of this application;

FIG. 21 is a schematic diagram of a structure of another neural network graph tiling apparatus according to an embodiment of this application;

FIG. 22 is a schematic diagram of a structure change in a neural network before and after DetectionOutput vertex optimization according to an embodiment of this application;

FIG. 23 is a schematic diagram of a structure of another neural network graph tiling apparatus according to an embodiment of this application;

FIG. 24 is a flowchart of a prediction method according to an embodiment of this application;

FIG. 25 is a schematic diagram of a structure of a neural network graph tiling apparatus according to an embodiment of this application; and

FIG. 26 is a schematic structural diagram of a data processing apparatus according to an embodiment of this application.

## DESCRIPTION OF EMBODIMENTS

To make a person skilled in the art better understand the technical solutions in this application, the following clearly describes the technical solutions in the embodiments of this application with reference to the accompanying drawings in the embodiments of this application. It is clear that the described embodiments are merely a part but not all of the embodiments of this application.

In the embodiments of the specification, and the accompanying drawings of this application, the terms "first", "second", "third", and the like are intended to distinguish between similar objects, but do not necessarily indicate a specific order or sequence. In addition, terms "including" and "having" and any variants thereof are intended to cover non-exclusive inclusion, for example, include a series of steps or units. A method, system, product, or device is not necessarily limited to those steps or units that are expressly listed, but may include other steps or units that are not expressly listed or inherent to such a process, method, product, or device.

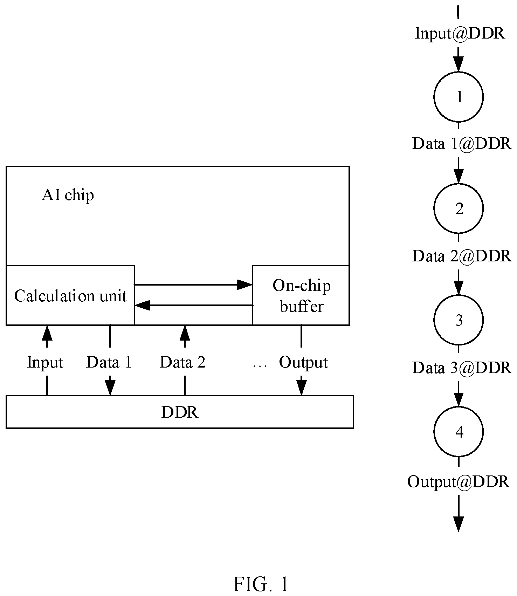

Currently, a conventional technical solution in which a neural network is used to perform a processing operation (for example, image processing or voice processing) is as follows: A single vertex (that is, a neuron or a calculation unit in the neural network) in the neural network is used as a basic unit to perform calculation layer-by-layer, and a calculation result is exported to external storage. A data amount of the calculation result of the single vertex in the neural network is usually large, and the calculation result cannot be stored into an internal storage unit, that is, an on-chip buffer. Therefore, the external storage needs to be accessed to store an output result of the single vertex in the neural network. FIG. 1 shows a classical calculation form of a neutral network (NN) in an AI chip. In this application, a DDR generally refers to an off-chip memory, an on-chip buffer generally refers to an on-chip memory, and the AI chip may be a central processing unit, a graphics processing unit, a neural network processing unit (NPU), or the like. In other words, the DDR may be a double rate synchronous dynamic random access memory (Double Data rate synchronous dynamic RAM), or may be another type of memory. A circle in FIG. 1 represents a calculation unit (Operation, OP for short) in the neural network, for example, "1", "2", "3", and "4" respectively represent four OPs, which may also be referred to as a vertex 1, a vertex 2, a vertex 3, and a vertex 4 (an OP may also be referred to as a vertex). Referring to FIG. 1, a calculation process of the AI chip is as follows: (1) The AI chip reads to-be-processed data (Input), that is, input data, from the DDR. (2) The AI chip performs calculation OP-by-OP, where a result of each OP needs to be repeatedly read and written between the AI chip and the DDR. (3) After completing calculation of the entire NN, the AI chip stores a final result (Output) into the DDR. It can be learned that in this calculation form, calculation is performed by using the OP as a basic unit, and the result of each OP needs to be repeatedly read and written between the AI chip and the DDR. As a result, external storage needs to be accessed frequently.

A main principle of this application is converting an expression form of the NN from using the OP as a basic unit into using a depth subgraph and a direct subgraph as basic units. The depth subgraph represents a depth subnetwork, and the direct subgraph represents a direct subnetwork. Each depth subgraph and each direct subgraph carries information about on-chip address allocation (which is completed by an on-chip address management module) and the like, and the depth subgraph also carries information about data tiling (which is completed by a data tiling module). Each depth subgraph and each direct subgraph includes a plurality of OPs, and the plurality of OPs included in each subgraph exchange data with each other by reading and writing the on-chip buffer. In other words, each depth subgraph is equivalent to an OP in the classical calculation form, and each direct subgraph is also equivalent to an OP in the classical calculation form. The AI chip may complete instruction mapping based on a new expression form (a form including the depth subgraph and the direct subgraph), that is, may complete calculation of the entire NN network in an on-chip memory (buffer). Each depth subgraph may be mapped to at least two calculation instruction pipelines, each direct subgraph may be mapped to one calculation instruction pipeline, and each calculation instruction pipeline is used to perform a series of operations.

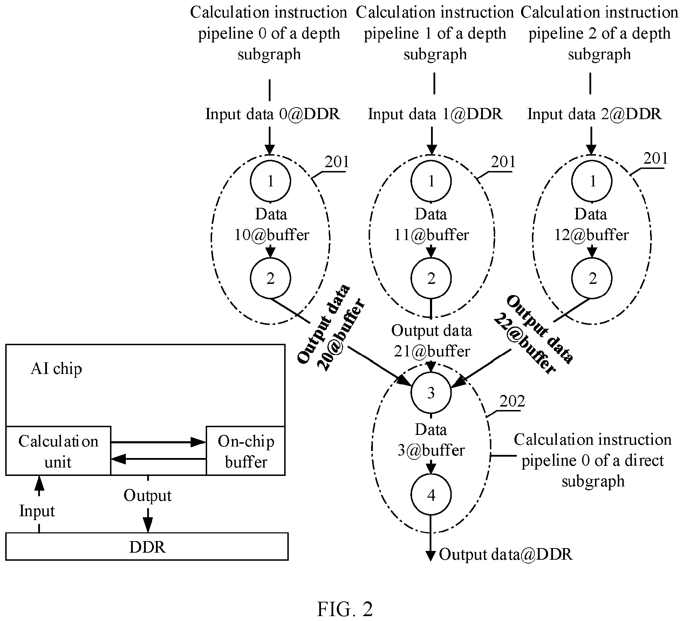

FIG. 2 shows a calculation form of a neural network in an AI chip according to an embodiment of this application. In FIG. 2, a depth subgraph 201 includes a vertex 1 and a vertex 2, and a direct subgraph 202 includes a vertex 3 and a vertex 4. It can be learned from FIG. 2 that the depth subgraph 201 processes input data 0 to obtain output data 20, and stores the output data 20 into an on-chip buffer (corresponding to a calculation instruction pipeline 0 of the depth subgraph); processes input data 1 to obtain output data 21, and stores the output data 21 into an on-chip buffer (corresponding to a calculation instruction pipeline 1 of the depth subgraph); and processes input data 2 to obtain output data 22, and stores the output data 22 into an on-chip buffer (corresponding to a calculation instruction pipeline 2 of the depth subgraph). The direct subgraph 202 processes data (that is, data obtained from the output data 21, the output data 22, and output data 20) that is input by the depth subgraph, and stores output data obtained through processing into an external memory (corresponding to a calculation instruction pipeline 0 of the direct subgraph). Optionally, the vertex 1 and the vertex 2 first process the input data 0 to obtain the output data 20, and store the output data 20 into the on-chip buffer; then process the input data 1 to obtain the output data 21, and store the output data 21 into the on-chip buffer; and finally process the input data 2 to obtain the output data 22, and store the output data 22 into the on-chip buffer. In other words, the depth subgraph successively processes at least two groups of data obtained by tiling input data of the depth subgraph. It can be understood that the depth subgraph corresponds to at least two calculation instruction pipelines, and each calculation instruction pipeline is used to process a part of the input data of the depth subgraph. After output data obtained through a plurality of times of calculation by the depth subgraph is concatenated, data obtained after concatenation may be used as input data of the direct subgraph or another depth subgraph. Each calculation instruction pipeline corresponds to a series of data migration and calculation instructions. In the solution of this application, a neural network graph representing the NN is tiled into a form in which a depth subgraph and a direct subgraph are used as basic units, calculation is performed by using calculation instruction pipelines corresponding to the depth subgraph and the direct subgraph as basic units. Referring to FIG. 2, a calculation process processed by the AI chip in this application is as follows: (1) The AI chip reads to-be-processed data (Input) from a DDR. (2) The AI chip performs calculation by using the PipeLine corresponding to the depth subgraph or the direct subgraph as a basic unit, where calculation results of a plurality of PipeLines of the depth subgraph are aggregated into the on-chip buffer, and the PipeLine of the direct subgraph is directly read from and written into the on-chip buffer, and the AI chip complete calculation OP-by-OP. (3) After completing calculation of the entire NN, the AI chip stores a result into the DDR. It can be learned from FIG. 2 that the depth subgraph and the direct subgraph each include a plurality of OPs, and the plurality of OPs included in each subgraph exchange data with each other by reading and writing the on-chip buffer. For the depth subgraph 201, the vertex 1 obtains data from the DDR, and each vertex other than the vertex 1 does not need to access the DDR when performing a processing operation, and only needs to read/write the on-chip buffer. For the direct subgraph 202, the vertex 4 stores a processing result (that is, output data) into the DDR, and each vertex other than the vertex 4 does not need to access the DDR when performing a processing operation, and only needs to read/write the on-chip buffer.

A difference between the depth subgraph and the direct subgraph lies in the following: The depth subgraph corresponds to at least two calculation instruction pipelines, and each calculation instruction pipeline is used to perform a processing operation based on a part of input data of the depth subgraph. The direct subgraph corresponds to only one calculation instruction pipeline, and the calculation instruction pipeline corresponding to the direct subgraph is used to perform a processing operation based on all input data of the direct subgraph. It can be understood that a plurality of PipeLines corresponding to the depth subgraph are used to successively process at least two groups of data obtained by tiling the input data, to obtain output data, that is, each PipeLine processes a part of the input data. For a depth subgraph, an amount of output data obtained by performing a processing operation by a calculation instruction pipeline corresponding to the depth subgraph is fixed. A larger quantity of pieces of data obtained by tiling input data of the depth subgraph indicates smaller storage overheads required for performing a processing operation by each calculation instruction pipeline. In addition, in a process of performing processing operations by the plurality of PipeLines corresponding to the depth subgraph, some addresses in the on-chip buffer can be multiplexed. To be specific, in the process of performing processing operations by the plurality of PipeLines corresponding to the depth subgraph, storage space occupied by invalid data (data not required in a subsequent processing operation) is released, and only valid data (data required in a subsequent processing operation) is retained. In this way, each PipeLine requires small storage overheads of the on-chip buffer when performing the processing operation. It can be understood that at least two groups of data obtained by tiling input data are separately processed to obtain output data, so that occupied storage space of the on-chip buffer can be greatly reduced. An execution operation (data is not tiled) that originally needs to be completed by accessing an external memory can be implemented simply by reading and writing the on-chip buffer, thereby reducing access to the external memory. For a specific vertex, when storage space required when the vertex processes input data of the vertex exceeds current available storage space of the on-chip buffer, the input data of the vertex is tiled, and a plurality of groups of data obtained by tiling the input data are separately processed. In this way, the vertex can complete a processing operation without accessing the external memory. In addition, processing operations performed by the PipeLines in the plurality of PipeLines corresponding to the depth subgraph are similar to each other, and a larger quantity of pieces of data obtained by tiling the input data of the depth subgraph indicates a larger quantity of PipeLines corresponding to the depth subgraph. Because the PipeLines successively perform processing (that is, perform processing in series), a larger quantity of PipeLines corresponding to the depth subgraph indicates longer time that is required by these PipeLines to complete processing operations. To consider both storage overheads and calculation efficiency, the input data of the depth subgraph needs to be tiled properly. Each direct subgraph corresponds to one PipeLine, and a vertex corresponding to the direct subgraph only needs to perform one processing operation. The depth subgraph corresponds to a plurality of PipeLines, and a vertex corresponding to the depth subgraph needs to perform a plurality of processing operations.

In conclusion, it can be learned that calculation efficiency of the vertex corresponding to the depth subgraph and overheads of on-chip storage space that are required by the vertex to perform a processing operation are both lower than those of the vertex corresponding to the direct subgraph. Therefore, the neural network graph needs to be properly tiled to obtain a depth subgraph and a direct subgraph, and PipeLines are generated based on the depth subgraph and the direct subgraph, so as to improve calculation efficiency while reducing access to the external memory. In addition, when the OP is used as a basic calculation unit. In a process of performing a processing operation, a PipeLine corresponding to the neural network needs to frequently access external storage. As a result, power consumption is high, and the AI chip cannot meet a requirement in a mobile phone terminal scenario, such as face detection and recognition in a screen-off scenario. When the depth subgraph and/or the direct subgraph are/is used as a basic calculation unit/basic calculation units, in the process of performing a processing operation, the PipeLine corresponding to the neural network does not need to frequently access the external storage, so that power consumption is low, and a requirement in a screen-off scenario or the like can be well met.

A manner of tiling a neural network graph to obtain a depth subgraph and a direct subgraph provided in an embodiment of this application is described below.

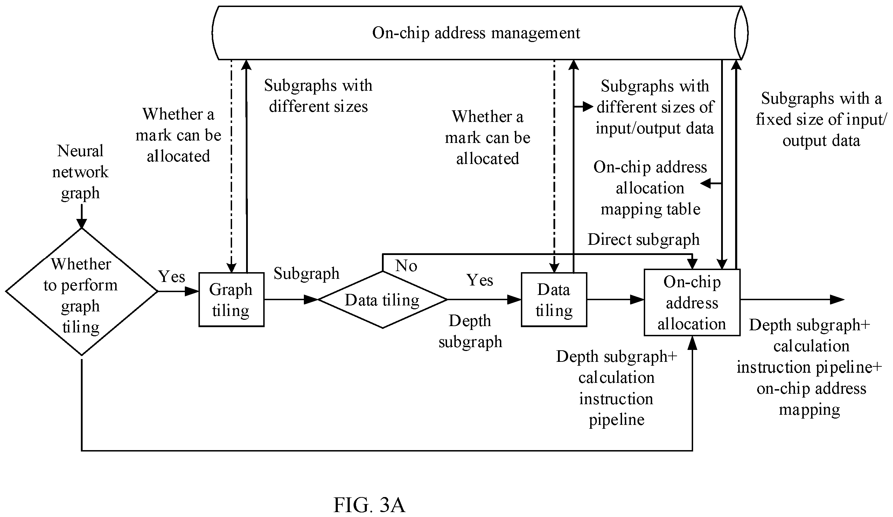

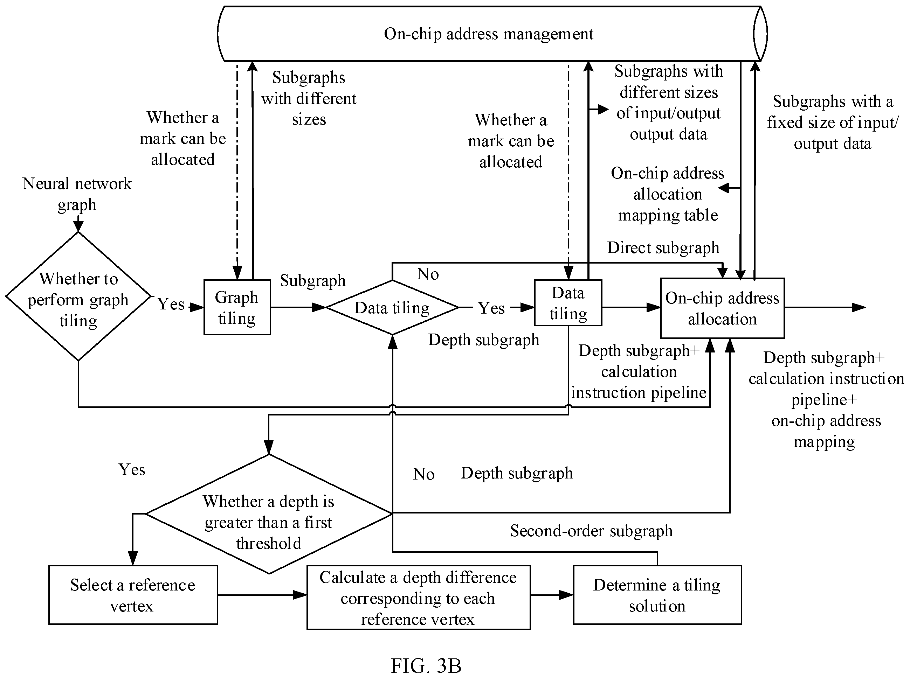

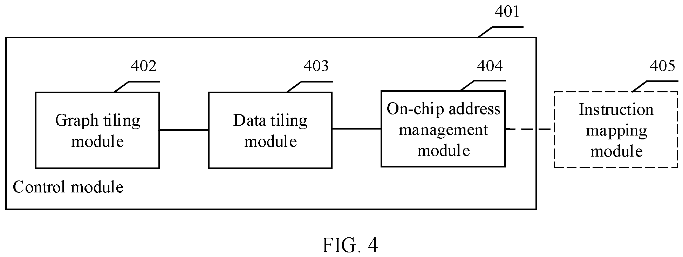

FIG. 3A shows a framework of a neural network graph tiling processing system according to an embodiment of this application. The framework in FIG. 3A shows a process of tiling a neural network graph to obtain a depth subgraph and a direct subgraph, and generating a calculation instruction pipeline corresponding to each of the depth subgraph and the direct subgraph. FIG. 3B shows a framework of another neural network graph tiling processing system according to an embodiment of this application. A procedure of further tiling a generated depth subgraph to obtain a second-order subgraph is added to FIG. 3B based on FIG. 3A. FIG. 4 is a schematic diagram of a structure of a neural network graph tiling apparatus according to an embodiment of this application. The neural network graph tiling apparatus tiles a neural network graph by using the framework of the neural network graph tiling processing system in FIG. 3A to obtain a depth subgraph and a direct subgraph, and generates a calculation instruction pipeline corresponding to each of the depth subgraph and the direct subgraph. The neural network graph tiling apparatus may be a server, a computer, a mobile phone, and another computer device. As shown in FIG. 4, the neural network graph tiling apparatus mainly includes a control module 401, a graph tiling module 402, a data tiling module 403, and an on-chip address management module 404. The four modules are interdependent to jointly implement a function of tiling a neural network graph. The control module 401 is configured to process, by controlling the graph tiling module 402, the data tiling module 403, the on-chip address management module 404, and the like, an NN using an OP as a basic unit into an NN using a subgraph as a basic unit, and the subgraph carries on-chip address mapping information and tiling information, and the like. The graph tiling module 402 is configured to tile a neural network graph (that is, an NN Graph) into two types of subgraphs, that is, a depth subgraph and a direct subgraph. An operation performed by the graph tiling module 402 corresponds to graph tiling in FIG. 3A. The data tiling module 403 is configured to tile input data of a depth subgraph (completing data tiling in a process of creating the depth subgraph), and map data obtained after tiling to different calculation instruction pipelines. From a perspective of network operation performance, the control module 401 may preferentially form a direct subgraph. The data tiling module 403 may preferentially allocate address space to a Tensor (that is, input/output data in a neural network) in a subgraph by using the on-chip address management module in a non-data tiling manner. If the non-tiling manner fails, the data tiling module 403 enters a data tiling manner, and then allocates address space to a Tensor obtained after tiling in the subgraph based on a subgraph obtained after data tiling. An operation performed by the data tiling module 403 corresponds to data tiling in FIG. 3A. In this embodiment of this application, the Tensor is an expression and definition of the input data and the output data in the neural network. The graph tiling module 402 and the data tiling module 403 may be a same module, or may be two independent modules. The on-chip address management module 404 is mainly configured to allocate on-chip storage space to a neural network graph or a specific Tensor, and is further configured to determine whether graph tiling and/or data tiling are/is feasible. Allocating an address to a specific neural network graph may be allocating an address to a Tensor inside a subgraph. An operation performed by the on-chip address management module 404 corresponds to on-chip address management and on-chip address allocation in FIG. 3A. As shown in FIG. 4, the neural network graph tiling apparatus may further include an instruction mapping module 405, configured to map a depth subgraph and a direct subgraph to corresponding PipeLines. Specifically, each depth subgraph is mapped to at least two PipeLines, and the at least two PipeLines mapped to the depth subgraph are used to implement a processing operation performed by a vertex included in the depth subgraph. Each direct subgraph is mapped to one PipeLine, and the PipeLine mapped to the direct subgraph is configured to implement a processing operation performed by a vertex included in the direct subgraph. In this application, the two types of subgraphs are unified to a form of a Pipeline to be mapped to an AI chip instruction, so as to ensure a unified calculation form of the two types of subgraphs.

A process of tiling a neural network graph to obtain a direct subgraph and a depth subgraph is briefly described below with reference to FIG. 3A and FIG. 4. A specific processing procedure is as follows: The control module 401 controls the on-chip address management module 404 to determine whether to perform graph tiling on a neural network graph. If graph tiling is performed on the neural network graph, the control module 401 controls the graph tiling module 402 to tile the neural network graph to obtain a depth subgraph and a direct subgraph. Alternatively, if the neural network is not tiled, the control module 401 controls the on-chip address management module 404 to allocate an on-chip address to a Tensor inside the neural network graph. The control module 401 controls the on-chip address management module 404 to determine whether to tile input data of a subgraph. If the input data of the subgraph is tiled, the control module 401 controls the data tiling module 403 and the on-chip address management module 404 to tile the input data of the subgraph (the depth subgraph). Alternatively, if the input data of the subgraph is not tiled, the control module 401 controls the on-chip address management module 404 to allocate an address to a Tensor inside the subgraph (the direct subgraph) to obtain address allocation information. The control module 401 maps the depth subgraph and the direct subgraph to calculation instruction pipelines.

After performing graph tiling (that is, first-level graph tiling) on the neural network graph by using the neural network graph tiling processing system in FIG. 3A to obtain the direct subgraph (that is, a first-order subgraph) and the depth subgraph (that is, a first-order subgraph), the neural network graph tiling apparatus further performs graph tiling (that is, second-level graph tiling) on a depth subgraph that is obtained through tiling and whose depth is not less than a first threshold, to obtain a second-order subgraph, so that a depth of at least one depth subgraph is less than the first threshold. A depth subgraph whose depth exceeds the first threshold is tiled, so that a quantity of processing operations performed by at least one vertex in a depth subnetwork represented by the depth subgraph can be decreased, thereby improving calculation efficiency. For example, a specific depth subgraph includes six vertices. When performing a processing operation, a depth subnetwork represented by the depth subgraph tiles input data of the depth subnetwork into three pieces of data for successive processing, and each vertex in the depth subnetwork needs to successively perform three processing operations, that is, one piece of data is processed at each time. The depth subgraph is tiled into a second-order depth subgraph (that is, a depth subgraph) including three vertices and a second-order direct subgraph (that is, a direct subgraph) including three vertices. When performing a processing operation, a second-order depth subnetwork (that is, a depth subnetwork) represented by the second-order depth subgraph tiles input data of the second-order depth subnetwork into three pieces of data for successive processing. When performing a processing operation, a second-order direct subnetwork (that is, a direct subnetwork) represented by the second-order direct subgraph processes input data of the second-order direct subnetwork as a whole. It can be learned that in this example, processing operations implemented by the second-order depth subnetwork and the second-order direct subnetwork are the same as processing operations implemented by the depth subnetwork. However, only three vertices need to successively perform three processing operations, so that calculation efficiency is improved.

A process of first tiling a neural network graph to obtain a direct subgraph and a depth subgraph, and then tiling a depth subgraph whose depth is not less than a first threshold is described below with reference to FIG. 3B and FIG. 4. A specific processing procedure is as follows: The control module 401 controls the on-chip address management module 404 to determine whether to perform graph tiling on a neural network graph. If graph tiling is performed on the neural network graph, the control module 401 controls the graph tiling module 402 to tile the neural network graph to obtain a depth subgraph and a direct subgraph. Alternatively, if the neural network is not tiled, the control module 401 controls the on-chip address management module 404 to allocate an on-chip address to a Tensor inside the neural network graph. The control module 401 controls the on-chip address management module 404 to determine whether to tile input data of a subgraph. If the input data of the subgraph is tiled, the control module 401 controls the data tiling module 403 and the on-chip address management module 404 to tile the input data of the subgraph (the depth subgraph). Alternatively, if the input data of the subgraph is not tiled, the control module 401 controls the on-chip address management module 404 to allocate an address to a Tensor inside the subgraph (the direct subgraph) to obtain address allocation information. After first-level graph tiling on the neural network graph is completed, the control module 401 determines whether a depth of the depth subgraph is not less than the first threshold. If the depth of the depth subgraph is less than the first threshold, the control module 401 controls the on-chip address management module 404 to allocate an address to a Tensor inside the subgraph (the depth subgraph) to obtain address allocation information. Alternatively, if the depth of the depth subgraph is not less than the first threshold, the control module 401 selects at least one reference vertex that is in a plurality of vertices included in the depth subgraph and whose output data needs to occupy storage space smaller than available storage space of a middle buffer. The control module 401 calculates a depth difference corresponding to each reference vertex. The control module 401 determines a tiling solution. The control module 401 maps the depth subgraph (including a first-order depth subgraph and a second-order depth subgraph) and the direct subgraph to calculation instruction pipelines. The first-order depth subgraph is a depth subgraph obtained by tiling the neural network graph, and the second-order depth subgraph is a depth subgraph obtained by tiling a depth subgraph whose depth is not less than the first threshold. Optionally, the control module 401 calculates a depth difference between two second-order subgraphs that are obtained by tiling the depth subgraph by using each reference vertex as a tiling point, to obtain a depth difference corresponding to each reference vertex. Each reference vertex corresponds to a depth difference. Optionally, that the control module 401 determines a tiling solution may be tiling the depth subgraph by using an intermediate vertex in the reference vertices that corresponds to a minimum depth difference as a tiling point, to obtain two second-order subgraphs (corresponding to the tiling solution). An implementation of performing graph tiling on a depth subgraph whose depth is not less than the first threshold is subsequently described in detail.

Further, the control module 401 controls the on-chip address management module 404 to allocate an address to a Tensor inside the depth subgraph. It can be learned from FIG. 3A that the on-chip address management module 404 needs to participate in each of the graph tiling process, the data tiling process, and the on-chip address allocation process. In the graph tiling process, the graph tiling module 402 transmits subgraph information (subgraphs with different sizes in FIG. 3A correspond to reference subgraphs in the following) to the on-chip address management module 404, and the on-chip address management module 404 determines a specific manner of tiling the neural network graph. Similarly, in the data tiling process, the data tiling module 403 transmits data tiling information (subgraphs with different sizes of Tensors in FIG. 3 A) to the on-chip address management module 404, and the on-chip address management module 404 determines a specific manner of tiling the input data of the depth subgraph. In the on-chip address allocation process, the on-chip address management module 404 allocates an on-chip address based on an on-chip address allocation mapping table, and generates calculation instruction pipelines of the direct subgraph and the depth subgraph. In a subsequent embodiment, a graph tiling method, a data tiling method, an on-chip address allocation method, and the like are described in detail. Details are not described herein.

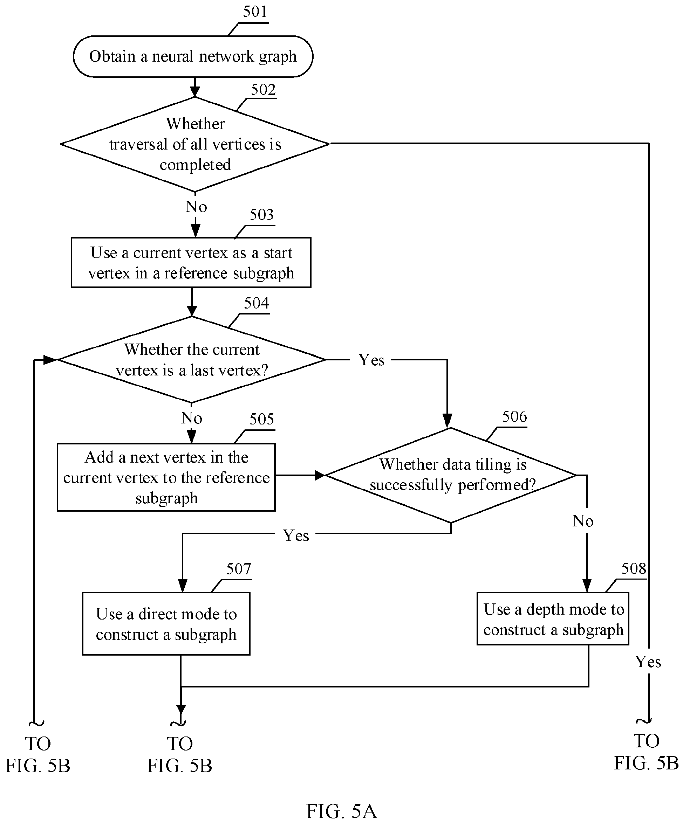

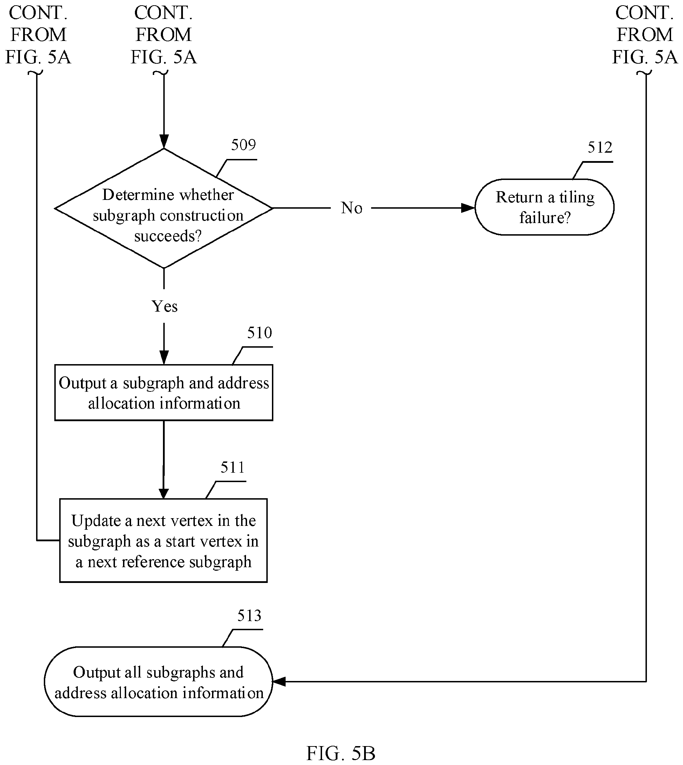

A procedure in which the control module 401 controls the graph tiling module 402, the data tiling module 403, and the on-chip address management module 404 to tile a neural network graph to obtain a depth subgraph and a direct subgraph, and an address allocation procedure are first described below. FIG. 5 A and FIG. 5B are a schematic flowchart of a neural network graph tiling method according to an embodiment of this application. As shown in FIG. 5A and FIG. 5B, the method may include the following steps.

501. A neural network graph tiling apparatus obtains a neural network graph.

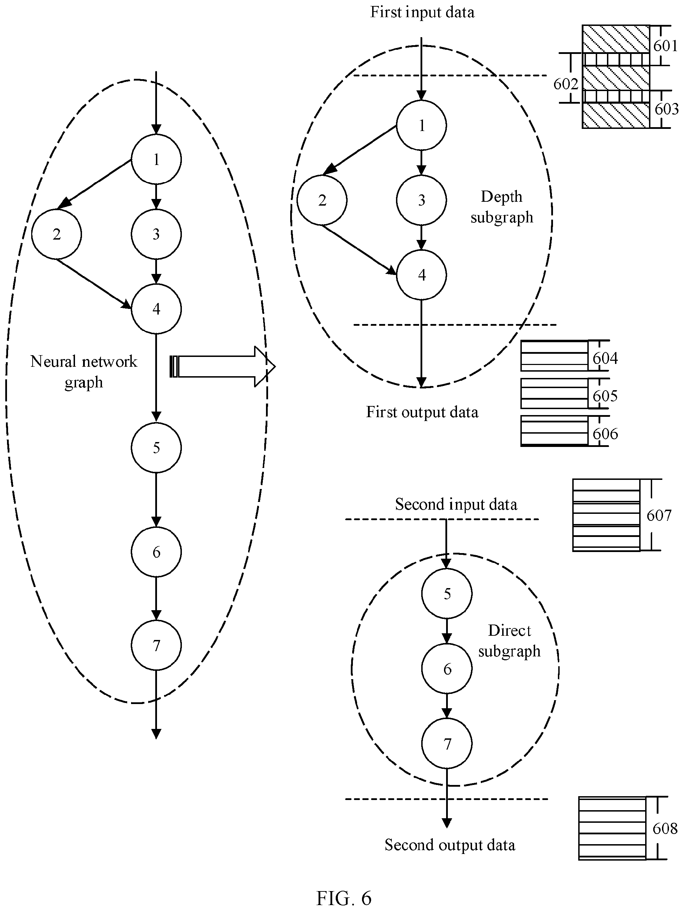

The neural network graph (NN Graph) is an expression form of a neural network. The neural network graph may include information about a processing operation performed by the neural network and information such as a size of storage space that is occupied by input/output data of each OP in the neural network in a process of processing a processing operation by the OP. That the neural network graph tiling apparatus obtains the neural network graph may be as follows: The neural network graph tiling apparatus receives the neural network graph that is input by a user; the neural network graph tiling apparatus obtains program code corresponding to the neural network, and determines the neural network graph based on the program code; the neural network graph tiling apparatus obtains reference information representing the neural network graph or the neural network, and determines the neural network graph based on the reference information; or the neural network graph tiling apparatus obtains the neural network graph in another manner. This is not limited in this application. FIG. 6 is a schematic diagram of a neural network graph tiling process according to an embodiment of this application. As shown in FIG. 6, an example neural network graph includes seven vertices, that is, a vertex 1 to a vertex 7 in FIG. 6. The neural network graph may reflect a sequence of performing processing operations by the vertices. A depth subgraph (including the vertex 1 to the vertex 4) and a direct subgraph (including the vertex 5 to the vertex 7) may be obtained by tiling the neural network graph. In FIG. 6, 601 to 603 are three groups of data obtained by tiling first input data, 604 is output data obtained by processing 601, 605 is output data obtained by processing 602, 606 is output data obtained by processing 603, 607 is second input data, 608 is second output data, and a straight-line stripe part is an overlapping part between two neighboring groups of input data, that is, an overlapping part between 601 and 602 and an overlapping part between 602 and 603. It can be learned from FIG. 6 that the first input data of the depth subgraph is tiled into three parts, and overlapping may exist between two neighboring parts of data. Each part is processed as input data of the depth subgraph to obtain a part of output data, and three parts of output data obtained in total are first output data of the depth subgraph. The first output data is the second input data of the direct subgraph.

502. The neural network graph tiling apparatus determines whether traversal of all vertices in the neural network graph is completed.

A process in which the neural network graph tiling apparatus tiles the neural network graph may be successively placing vertices included in the neural network graph into a direct subgraph or a depth subgraph through tiling in a sequence of performing processing operations by the vertices, until traversal of all the vertices is completed. Determining whether traversal of all the vertices in the neural network graph is completed may be determining whether a last vertex in the neural network graph is placed into a specific direct subgraph or depth subgraph through tiling. Step 513 is performed if traversal of all the vertices in the neural network graph is completed; or step 503 is performed if traversal of all the vertices in the neural network graph is incomplete.

503. The neural network graph tiling apparatus uses a current vertex as a start vertex in a reference subgraph.

The current vertex is a current to-be-tiled vertex in the neural network graph. To be specific, each vertex that is in the neural network graph and that performs a processing operation before the current vertex is placed into a direct subgraph or a depth subgraph through tiling, and all other vertices need to perform a processing operation after the current vertex.

504. The neural network graph tiling apparatus determines whether the current vertex is a last vertex in the neural network graph.

Step 506 is performed if the current vertex is the last vertex in the neural network graph; or step 505 is performed if the current vertex is not the last vertex in the neural network graph.

505. The neural network graph tiling apparatus adds a next vertex of the current vertex to the reference subgraph.

The next vertex of the current vertex may be a vertex that is in the neural network graph and that first performs a processing operation after the current vertex performs a processing operation.

506. The neural network graph tiling apparatus determines whether data tiling is successfully performed.

Step 507 is performed if data tiling is successfully performed; or step 508 is performed if data tiling fails to be performed. An implementation of step 506 is described in detail in a subsequent embodiment. Details are not described herein.

507. The neural network graph tiling apparatus constructs a subgraph by using a direct mode.

The neural network graph tiling apparatus constructs a subgraph by using a direct mode based on the reference subgraph obtained in step 504 or step 505. For example, the reference subgraph includes the vertex 5 and the vertex 6 in FIG. 6. The neural network graph tiling apparatus constructs a sub graph based on the reference subgraph by using a direct mode, to obtain a direct subgraph including the vertex 5 to the vertex 7.

508. The neural network graph tiling apparatus constructs a subgraph by using a depth mode.

The neural network graph tiling apparatus constructs a subgraph by using a depth mode based on the reference subgraph obtained in step 504 or step 505. For example, the reference subgraph includes the vertex 1 and the vertex 2 in FIG. 6. The neural network graph tiling apparatus constructs a sub graph based on the reference subgraph by using a depth mode, to obtain a depth subgraph (referring to FIG. 6) including the vertex 1 to the vertex 4. The procedure in FIG. 5A and FIG. 5B mainly describes a neural network graph tiling control procedure, that is, a control procedure performed by a control module. A manner of constructing a subgraph by using a direct mode and a manner of constructing a subgraph by using a depth mode are described in a subsequent embodiment. Details are not described herein.

509. The neural network graph tiling apparatus determines whether subgraph construction succeeds.

Step 510 is performed if subgraph construction succeeds; or step 512 is performed if subgraph construction fails. That the neural network graph tiling apparatus determines whether subgraph construction succeeds may be determining whether a direct subgraph or a depth subgraph is successfully constructed. Specifically, if a depth subgraph is obtained after the neural network graph tiling apparatus performs step 508, it is determined that subgraph construction succeeds. Alternatively, if information indicating that subgraph construction fails is output after the neural network graph tiling apparatus performs step 508, it is determined that subgraph construction fails. Specifically, if a depth subgraph or a direct subgraph is obtained after the neural network graph tiling apparatus performs step 507, it is determined that subgraph construction succeeds. Alternatively, if information indicating that subgraph construction fails is output after the neural network graph tiling apparatus performs step 507, it is determined that subgraph construction fails.

510. The neural network graph tiling apparatus outputs a subgraph and address allocation information.

The address allocation information is obtained in a process of constructing the subgraph. The address allocation information is an on-chip address that is allocated to each vertex in the subgraph in a process of performing a processing operation by the vertex.

511. The neural network graph tiling apparatus updates a next vertex in the subgraph as a start vertex in a next reference subgraph.

For example, the subgraph that is output in step 510 is the depth subgraph in FIG. 6. In this case, updating the next vertex in the subgraph as the start vertex in the next reference subgraph is using the vertex 5 as the start vertex in the next reference subgraph.

512. The neural network graph tiling apparatus returns a tiling failure.

That the neural network graph tiling apparatus returns a tiling failure may be outputting information indicating that neural network graph tiling fails.

513. Output all subgraphs and address allocation information.

From a perspective of reducing overheads of an on-chip buffer, the neural network graph may be tiled into a plurality of depth subgraphs. In other words, subgraphs obtained by tiling the neural network graph do not include the direct subgraph.

In this embodiment of this application, the neural network graph tiling apparatus tiles the neural network graph in two subgraph construction manners, which not only can effectively decrease a quantity of times of accessing an external memory, but also can ensure that calculation performance is not greatly affected.

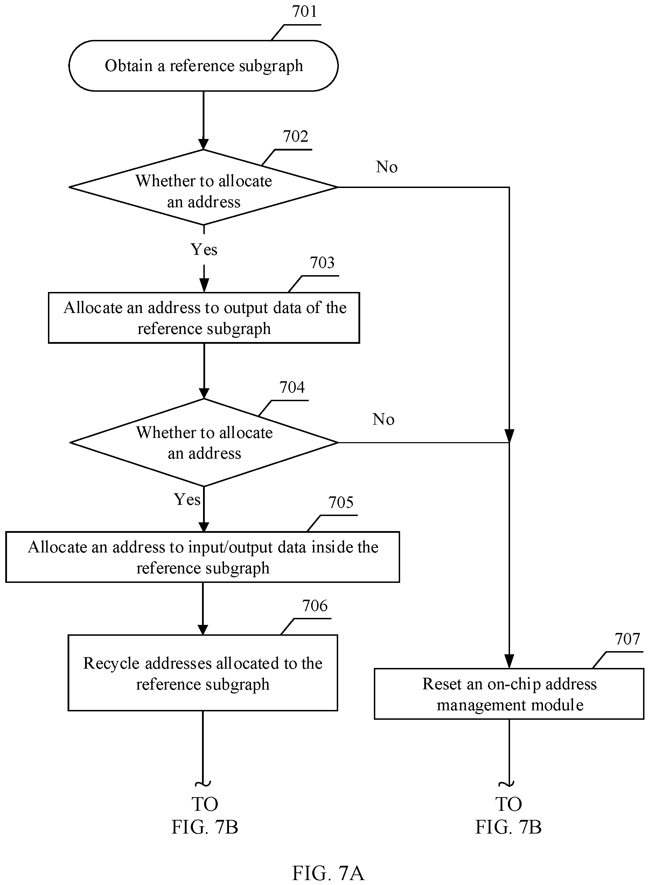

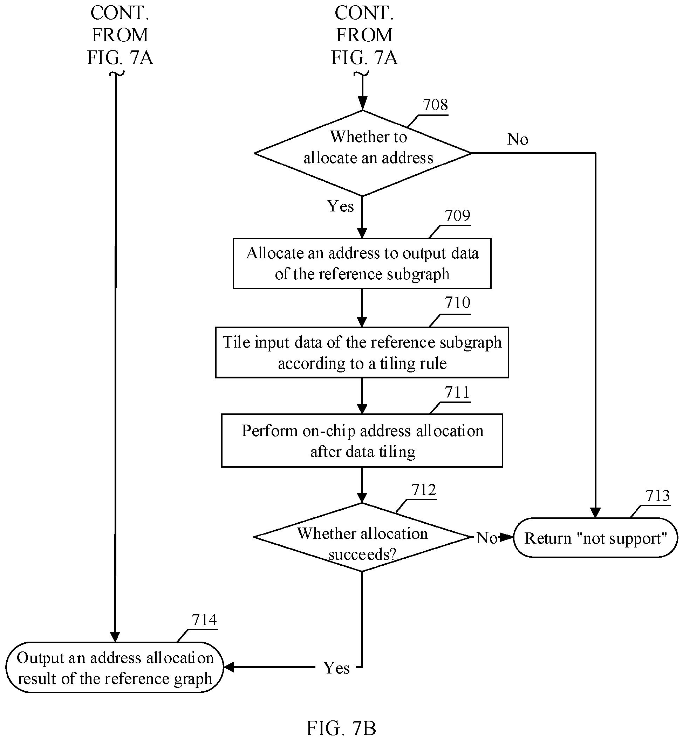

A specific implementation of step 506 in FIG. 5A is not described in detail in the foregoing embodiment. How to determine whether data tiling is successfully performed is described below with reference to FIG. 7A and FIG. 7B. FIG. 7A and FIG. 7B are a flowchart of a data tiling determining method according to an embodiment of this application. As shown in FIG. 7A and FIG. 7B, the method includes the following steps.

701. A neural network graph tiling apparatus obtains a reference subgraph.

That the neural network graph tiling apparatus obtains the reference subgraph may be as follows: An on-chip address management module receives the reference subgraph (that is, the reference subgraph obtained in step 504 or step 505) from a control module. The method procedure in FIG. 7A and FIG. 7B may be understood as a method procedure in which the control module invokes a data tiling module and the on-chip address management module to perform data tiling on the reference subgraph.

702. The neural network graph tiling apparatus determines whether to allocate an address of an on-chip buffer to input/output data inside the reference subgraph.

Step 703 is performed if the neural network graph tiling apparatus determines to allocate the address of the on-chip buffer to the input/output data inside the reference subgraph; or step 707 is performed if the neural network graph tiling apparatus determines not to allocate the address of the on-chip buffer to the input/output data inside the reference subgraph. The input/output data inside the reference subgraph is input/output data, other than input data and output data of the reference subgraph, of each vertex in the reference subgraph in a process of performing a processing operation by the vertex. For example, the depth subgraph in FIG. 6 is used as a reference subgraph. Input data of the reference subgraph is the first input data, and output data of the reference subgraph is the first output data. Input/output data inside the reference subgraph is output data of the vertex 1, input data and output data of the vertex 3, input data and output data of the vertex 2, and input data of the vertex 4. That the neural network graph tiling apparatus determines whether to allocate the address of the on-chip buffer to the input/output data inside the reference subgraph may be determining whether storage space required by input/output data other than the input data and the output data of the reference subgraph in a process in which the reference subgraph processes a processing operation is larger than available storage space of the on-chip buffer. Optionally, the neural network graph tiling apparatus simulates a process of allocating an address of the on-chip buffer to the input/output data inside the reference subgraph. If allocation succeeds, the neural network graph tiling apparatus determines to allocate the address of the on-chip buffer to the input/output data inside the reference subgraph; or if allocation fails, the neural network graph tiling apparatus determines not to allocate the address of the on-chip buffer allocated to the input/output data inside the reference subgraph.

703. The neural network graph tiling apparatus allocates the address of the on-chip buffer to the input/output data inside the reference subgraph.

That the neural network graph tiling apparatus allocates the address of the on-chip buffer to the input/output data inside the reference subgraph may be as follows: The control module invokes the on-chip address management module to allocate the address of the on-chip buffer to the input/output data inside the reference subgraph. An implementation of step 703 is subsequently described in detail.

704. The neural network graph tiling apparatus determines whether to allocate an address to output data of the reference subgraph.

Step 705 is performed if the neural network graph tiling apparatus determines to allocate an address to the output data of the reference subgraph; or step 707 is performed if the neural network graph tiling apparatus determines not to allocate an address to the output data of the reference subgraph. That the neural network graph tiling apparatus determines whether to allocate an address to the output data of the reference subgraph may be as follows: The neural network graph tiling apparatus determines whether current available storage space of the on-chip buffer is larger than storage space required by the output data of the reference subgraph. If the current available storage space of the on-chip buffer is larger than the storage space required by the output data of the reference subgraph, the neural network graph tiling apparatus allocates an address to the output data of the reference subgraph; or if the current available storage space of the on-chip buffer is not larger than the storage space required by the output data of the reference subgraph, the neural network graph tiling apparatus does not allocate an address to the output data of the reference subgraph.

705. The neural network graph tiling apparatus allocates an address to the output data of the reference subgraph.

That the neural network graph tiling apparatus allocates an address to the output data of the reference subgraph may be as follows: The control module invokes the on-chip address management module to allocate an address of the on-chip buffer to the output data of the reference subgraph.

706. The neural network graph tiling apparatus recycles all addresses allocated to the reference subgraph.

That the neural network graph tiling apparatus recycles all the addresses allocated to the reference subgraph may be as follows: The on-chip address management module releases storage space occupied by current invalid data (that is, data not required in a subsequent processing operation).

707. The neural network graph tiling apparatus resets the on-chip address management module.

That the neural network graph tiling apparatus resets the on-chip address management module may be releasing the address that is of the on-chip buffer and that is allocated by performing step 703 and/or step 705.

708. The neural network graph tiling apparatus determines whether to allocate an address to output data of the reference subgraph.

Step 709 is performed if the neural network graph tiling apparatus determines to allocate an address to the output data of the reference subgraph; or step 713 is performed if the neural network graph tiling apparatus determines not to allocate an address to the output data of the reference subgraph. An implementation of step 708 may be the same as that of step 704.

709. The neural network graph tiling apparatus allocates an address to the output data of the reference subgraph.

An implementation of step 709 may be the same as that of step 705.

710. The neural network graph tiling apparatus tiles input data of the reference subgraph according to a tiling rule.

That the neural network graph tiling apparatus tiles the input data of the reference subgraph according to the tiling rule may be as follows: The control mode invokes the on-chip address management module to tile the input data of the reference subgraph according to the tiling rule. An implementation of step 710 is subsequently described in detail.

711. When the input data of the reference subgraph is tiled into at least two parts, the neural network graph tiling apparatus allocates the address of the on-chip buffer to the input/output data inside the reference subgraph.

That when the input data of the reference subgraph is tiled into at least two parts, the neural network graph tiling apparatus allocates the address of the on-chip buffer to the input/output data inside the reference subgraph may be as follows: The control module invokes the on-chip address management module to allocate the address of the on-chip buffer to the input/output data inside the reference subgraph when the input data of the reference subgraph is tiled into at least two parts. It is assumed that the input data of the reference subgraph is tiled into a first part of data, a second part of data, and a third part of data. When the first part of data is used as the input data of the reference subgraph, the on-chip address management module allocates the address of the on-chip buffer to the input/output data inside the reference subgraph and the output data of the reference subgraph. In a process of allocating the address, the on-chip address management module may release an address occupied by invalid data (for example, data obtained in a process of processing the first part of data). When the second part of data is used as the input data of the reference subgraph, the on-chip address management module allocates the address of the on-chip buffer to the input/output data inside the reference subgraph and the output data of the reference subgraph. In a process of allocating the address, the on-chip address management module may release an address occupied by invalid data (for example, data obtained in a process of processing the second part of data). When the third part of data is used as the input data of the reference subgraph, the on-chip address management module allocates the address of the on-chip buffer to the input/output data inside the reference subgraph and the output data of the reference subgraph. Step 711 is a process of allocating the address of the on-chip buffer, but allocation may fail in this process due to insufficient current available storage space of the on-chip buffer. In other words, step 711 does not necessarily succeed, but is a process of trying to perform allocation, because before performing step 711, the neural network graph tiling apparatus cannot accurately determine whether the address of the on-chip buffer can be successfully allocated to the input/output data inside the reference subgraph when the input data of the reference subgraph is tiled into at least two parts.

712. The neural network graph tiling apparatus determines whether the address of the on-chip buffer is successfully allocated to the input/output data inside the reference subgraph.

An implementation of step 712 may be the same as that of step 703. Step 714 is performed if the address of the on-chip buffer is successfully allocated to the input/output data inside the reference subgraph; or step 713 is performed if the address of the on-chip buffer fails to be allocated to the input/output data inside the reference subgraph.

713. The neural network graph tiling apparatus returns "not support".

That the neural network graph tiling apparatus returns "not support" may be returning information indicating that data tiling is not supported. If the neural network graph tiling apparatus returns "not support", a result of determining performed in step 506 is that data tiling fails.

714. The neural network graph tiling apparatus outputs an address allocation result of the reference subgraph.

The address allocation result that is of the reference subgraph and that is output by the neural network graph tiling apparatus may be address allocation information obtained in step 702 and address allocation information obtained in step 704; or may be address allocation information obtained in step 708 and address allocation information obtained in step 711. If the neural network graph tiling apparatus outputs the address allocation result of the reference subgraph, a result of determining performed in step 506 is that data tiling succeeds.

It can be learned from FIG. 7A and FIG. 7B that the neural network graph tiling apparatus first allocates an address to the reference subgraph when the input data of the reference subgraph is not tiled, and then allocates an address to the reference subgraph when the input data of the reference subgraph is tiled. Compared with that an address is allocated to the reference subgraph when the input data of the reference subgraph is tiled, fewer operations need to be performed to allocate an address to the reference subgraph when the input data of the reference subgraph is not tiled. In this manner, time can be reduced, that is, execution efficiency of step 506 is higher. When the input data of the reference subgraph is tiled, time required for allocating an address to the input/output data inside the reference subgraph far exceeds time required for allocating an address to the output data of the reference subgraph. Therefore, when an address is allocated to the reference subgraph when the input data of the reference subgraph is tiled, an address is first allocated to the output data of the reference subgraph, and then an address is allocated to the input/output data inside the reference subgraph. When an address fails to be allocated to the output data of the reference subgraph, an address allocation process ends in time, which can effectively reduce time.

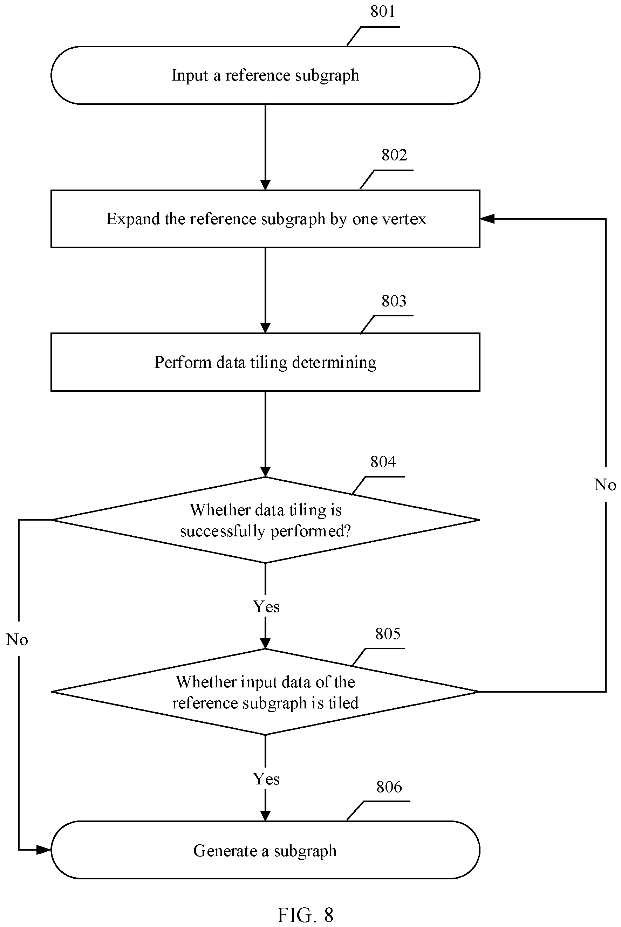

An implementation of step 507 in FIG. 5A is not described in detail in the foregoing embodiment. How to construct a subgraph by using a Direct mode is described below with reference to FIG. 8. FIG. 8 is a flowchart of a method for constructing a subgraph by using a Direct mode. As shown in FIG. 8, the method may include the following steps.

801. A neural network graph tiling apparatus obtains a reference subgraph.

That the neural network graph tiling apparatus obtains the reference subgraph may be as follows: A graph tiling module receives the reference subgraph (that is, the reference subgraph obtained in step 504 or step 505) from a control module. The method procedure in FIG. 8 may be understood as a procedure in which the control module invokes the graph tiling module and an on-chip address management module to construct a depth subgraph or a direct subgraph based on the reference subgraph.

802. The neural network graph tiling apparatus adds a current to-be-tiled vertex in a neural network graph to the reference subgraph.

That the neural network graph tiling apparatus adds the current to-be-tiled vertex in the neural network graph to the reference subgraph may be as follows: The graph tiling module adds the current to-be-tiled vertex in the neural network graph to the reference subgraph. Adding the current to-be-tiled vertex in the neural network graph to the reference subgraph may be understood as expanding the reference subgraph by one vertex. For example, vertices included in the reference subgraph are the vertex 1 and the vertex 2 in FIG. 6, and the to-be-tiled vertex in the neural network graph is the vertex 3 in FIG. 6. The vertex 3 is added to the reference subgraph, and vertices included in the reference subgraph become the vertex 1 to the vertex 3.

803. The neural network graph tiling apparatus performs data tiling determining.

That the neural network graph tiling apparatus performs data tiling determining may be as follows: The control module invokes a data tiling module and the on-chip address management module to perform the method procedure in FIG. 7A and FIG. 7B.

804. The neural network graph tiling apparatus determines whether data tiling is successfully performed.

Step 804 is the same as step 506 in FIG. 5A. If the neural network graph tiling apparatus returns "not support" after performing data tiling determining, it is determined that data tiling fails to be performed; or if the neural network graph tiling apparatus outputs an address allocation result of the reference subgraph, it is determined that data tiling is successfully performed. Step 805 is performed if data tiling is successfully performed; or step 806 is performed if data tiling fails to be performed.

805. The neural network graph tiling apparatus determines whether input data of the reference subgraph is tiled.

Step 806 is performed if the input data of the reference subgraph is tiled; or step 802 is performed if the input data of the reference subgraph is not tiled. When successfully performing data tiling, the neural network graph tiling apparatus outputs the address allocation result of the reference subgraph. Optionally, the address allocation result may include information indicating whether the input data of the reference subgraph is tiled. The neural network graph tiling apparatus determines, based on the information, whether the input data of the reference subgraph is tiled. It can be understood that an address allocation result that is output when the input data of the reference subgraph is tiled is different from an address allocation result that is output when the input data of the reference subgraph is not tiled. Optionally, the neural network graph tiling apparatus determines, based on the address allocation result, whether the input data of the reference subgraph is tiled.

806. The neural network graph tiling apparatus generates a direct subgraph or a depth subgraph.

If data tiling fails to be performed, the reference subgraph is used as a direct subgraph. Alternatively, if data tiling is successfully performed and the input data of the reference subgraph is tiled, the reference subgraph is used as a depth subgraph.

In this embodiment of this application, a subgraph is constructed by using a Direct mode, so that a direct subgraph or a depth subgraph can be quickly constructed.

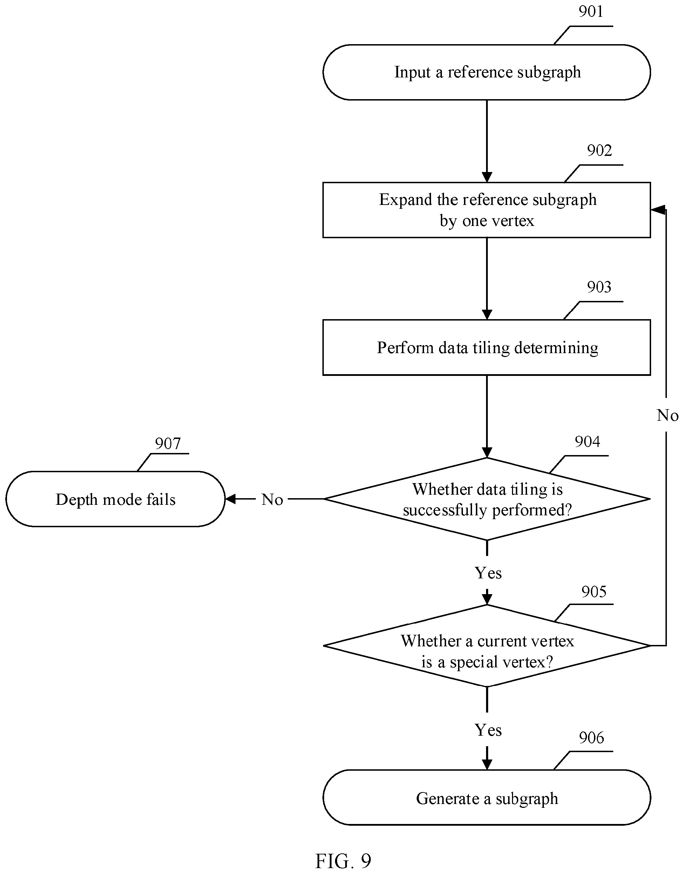

An implementation of step 508 in FIG. 5A is not described in detail in the foregoing embodiment. How to construct a subgraph by using a Depth mode is described below with reference to FIG. 9. FIG. 9 is a flowchart of a method for constructing a subgraph by using a Depth mode. As shown in FIG. 9A and FIG. 9B, the method may include the following steps.

901. A neural network graph tiling apparatus obtains a reference subgraph.

That the neural network graph tiling apparatus obtains the reference subgraph may be as follows: A graph tiling module receives the reference subgraph (that is, the reference subgraph obtained in step 504 or step 505) from a control module. The method procedure in FIG. 9 may be understood as a procedure in which the control module invokes the graph tiling module, a data tiling module, and an on-chip address management module to construct a depth subgraph based on the reference subgraph.

902. The neural network graph tiling apparatus adds a current to-be-tiled vertex in a neural network graph to the reference subgraph.

That the neural network graph tiling apparatus adds the current to-be-tiled vertex in the neural network graph to the reference subgraph may be as follows: The graph tiling module adds the current to-be-tiled vertex in the neural network graph to the reference subgraph. Adding the current to-be-tiled vertex in the neural network graph to the reference subgraph may be understood as expanding the reference subgraph by one vertex.

903. The neural network graph tiling apparatus performs data tiling determining.

That the neural network graph tiling apparatus performs data tiling determining may be as follows: The control module invokes the data tiling module and the on-chip address management module to perform the method procedure in FIG. 7A and FIG. 7B.

904. The neural network graph tiling apparatus determines whether data tiling is successfully performed.

Step 905 is performed if data tiling is successfully performed; or step 907 is performed if data tiling fails to be performed. Step 901 to step 904 successively correspond to step 801 to step 804.

905. The neural network graph tiling apparatus determines whether a current vertex is a special vertex.

The special vertex may include a Pooling vertex and the like. The current vertex is a vertex recently added in step 902 (that is, a vertex by which the reference subgraph is expanded in step 902). Step 906 is performed if the current vertex is the feature vertex; or step 902 is performed if the current vertex is not the feature vertex. Determining whether the current vertex is the special vertex is only an optional manner provided in this embodiment of this application to determine whether to output the current reference subgraph as a depth subgraph. In actual application, the neural network graph tiling apparatus may output the current reference subgraph as a depth subgraph when the current reference subgraph meets another condition.

906. The neural network graph tiling apparatus uses the reference subgraph as a depth subgraph.

907. The neural network graph tiling apparatus determines that subgraph construction by using a depth mode fails.

In this embodiment of this application, a subgraph is constructed by using a Depth mode, so that a depth subgraph can be quickly constructed, and when a subgraph fails to be constructed, it is determined in time that subgraph construction fails.

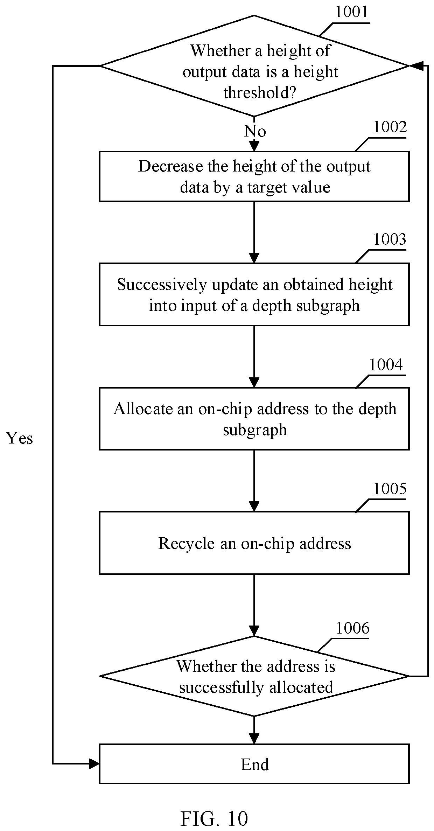

An implementation of step 710 in FIG. 7B is not described in detail in the foregoing embodiment. A tiling rule for data tiling is ensuring that a height of each group of output data is as large as possible while space allocation can be completed in an on-chip buffer. In this way, a quantity of PipeLines mapped to a depth subgraph can be decreased, thereby improving calculation efficiency. In some embodiments, output data is a three-dimensional matrix or a four-dimensional matrix, and a height of the output data is a height of the three-dimensional matrix or the four-dimensional matrix. Therefore, the following attempt may be made: an original height of the output data is circularly decreased by a target value (for example, 1). If an address space allocation requirement is met, tiling is stopped, and an obtained height of the output data is a required height. Output data of a depth subgraph may be a four-dimensional data block of [N, C, H, W], and H corresponds to a height of the output data. The height of the output data is determined by continuously tiling the output data to be "thin". Output data of a depth subgraph may be a three-dimensional data block of [C, H, W], and H corresponds to a height of the output data. Corresponding tiling is obtained by continuously tiling the output data to be "thin". N, C, H, and W are all integers greater than 0. N may represent a quantity of data blocks corresponding to the output data, C represents a quantity of channels, and W represents a width of output data. How to tile input data of a reference subgraph (a depth subgraph) according to a tiling rule is described below with reference to FIG. 10, that is, an implementation of step 710 in FIG. 7B.

FIG. 10 is a flowchart of a data tiling method according to an embodiment of this application. As shown in FIG. 10, the method may include the following steps.

1001. A neural network graph tiling apparatus determines whether a height of output data of a depth subgraph is a height threshold.

The height threshold may be 1. Assuming that the output data is a three-dimensional matrix of [5, 10, 256], the height of the output data is 10. This procedure ends if the height of the output data of the depth subgraph is the height threshold; or step 1002 is performed if the height of the output data of the depth subgraph is not the height threshold.

1002. The neural network graph tiling apparatus subtracts a target value from the height of the output data of the depth subgraph to obtain a reference height.

The target value may be 1, 2, 3, or the like. This is not limited in this application. The reference height is a height obtained after the target value is subtracted from the height of the output data. The target value represents a height value by which the height of the output data is decreased each time. For example, the output data is a three-dimensional matrix of [5, 10, 256], and the target value is 1. A height (corresponding to the reference height) obtained after the target value 1 is subtracted from the height 10 of the output data is 9.

1003. The neural network graph tiling apparatus tiles input data of the depth subgraph based on the reference height.

That the neural network graph tiling apparatus tiles the input data of the depth subgraph based on the reference height may be as follows: A data tiling module divides a complete height (that is, an original height) of the output data of the depth subgraph by the reference height, and rounds up a calculation result to obtain a quantity of PipeLines to be obtained through tiling; and tiles the input data of the depth subgraph based on the quantity of PipeLines. Each PipeLine corresponds to a group of data. The complete height of the output data of the depth subgraph is a height of the output data of the depth subgraph before the height of the output data of the depth subgraph is adjusted. For example, the original height of the output data of the depth subgraph is 7, and an adjusted height of the output data is 4. 7/4 is calculated and rounded up to obtain 2 (a quantity of PipeLines), and the input data of the depth subgraph is tiled into two parts.

1004. The neural network graph tiling apparatus allocates an address of an on-chip buffer to the depth subgraph.

That the neural network graph tiling apparatus allocates the address of the on-chip buffer to the depth subgraph may be as follows: An on-chip address manager allocates the address of the on-chip buffer to input/output data that is of a plurality of PipeLines corresponding to the depth subgraph and that is in a process of performing processing operations by the PipeLines. It can be understood that the on-chip address manager allocates the address of the on-chip buffer to the input/output data based on information about storage space required by the input/output data that is of the plurality of PipeLines corresponding to the depth subgraph and that is in the process of performing processing operations by the PipeLines, and the plurality of PipeLines corresponding to the depth subgraph do not need to perform processing operations.

1005. The neural network graph tiling apparatus recycles an on-chip address (the address of the on-chip buffer) of invalid data.

The invalid data is data not required in a subsequent processing operation. For example, the input data of the depth subgraph is tiled into two parts, that is, a first part and a second part. When the first part is processed as the input data to obtain first output, storage space occupied by other data used in a process of processing the first part is released, and only the first output is retained. When the second part is processed as the input data to obtain second output, storage space occupied by other data used in a process of processing the second part is released, and only the second output is retained. In other words, the on-chip address management module may continuously recycle current available storage space of the on-chip buffer by using a memory multiplexing mechanism.

1006. The neural network graph tiling apparatus determines whether the address is successfully allocated.

This procedure ends if the address is successfully allocated; or step 1001 is performed if the address fails to be allocated.

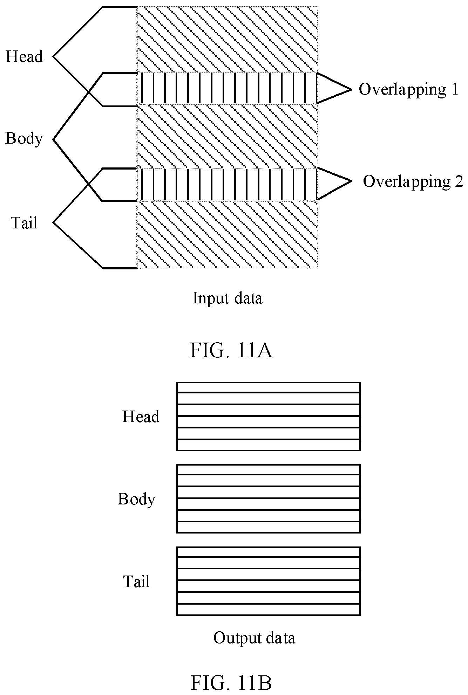

The input data of the depth subgraph has three forms after being tiled: (1) a head (Graph Head) form; (2) a body (Graph Body) form; and (3) a tail (Graph Tail) form. If an OP corresponding to the depth subgraph is a convolution operator or the like, the input data usually includes padding (Padding) information, the Graph Head includes up padding, the Graph Body does not include Up Padding and down padding, and the Graph Tail includes Down Padding. After the input data of the depth subgraph is tiled, a corresponding address offset needs to be calculated for a corresponding PipeLine (after the input data is tiled, different storage space needs to be accessed when blocks (groups of data) obtained after tiling are independently processed). After the input data of the depth subgraph is tiled, an overlapping part may or may not exist between at least two obtained groups of data. That overlapping exists between two groups of data means that two neighboring groups of data obtained through tiling include same data. FIG. 11A is a schematic diagram of three groups of data obtained by tiling input data. It can be learned from FIG. 11A that the input data is tiled into three parts: head data, body data, and tail data. Overlapping (overlapping 1 in FIG. 11A) exists between the head data and the body data, and overlapping (overlapping 2 in FIG. 11A) also exists between the body data and the tail data. In actual application, when the input data of the depth subgraph is tiled into four or more pieces of data, one piece of head data, one piece of tail data, and a plurality of pieces of body data may be obtained. Storage space occupied by all the pieces of body data has a same size. A manner in which the on-chip address management module in the neural network graph tiling apparatus calculates an address offset of each piece of data obtained by tiling the input data is as follows:

$$GraphHeadaddr=input\ Tensor\ addr;$$

$$GraphBodyaddr=GraphHead\ addr+GraphHead\ data\ size-overlapSize;$$

and

$$GraphTailaddr=GraphBody\ addr+(Graph\ Body\ data\ size-overlapSize)*(loop-2).$$

In the foregoing manner, "input Tensor addr" represents a base address of the input data, "GraphHead addr" represents a base address of the head data, "GraphHead data size" represents a storage address occupied by the head data, overlapSize represents a storage address occupied by overlapped data between the body data and the head data, "GraphBodyaddr" represents a base address of the body data, "GraphTailaddr" represents a base address of the tail data, "Graph Body data size" represents a storage address occupied by one piece of body data, and "loop" represents a quantity of pieces of data obtained by tiling the input data. FIG. 11B is a schematic diagram of output data. The output data in FIG. 11B is three groups of data obtained after a PipeLine corresponding to the depth subgraph separately processes the three groups of data in FIG. 11A as input data. The head data, the body data, and the tail data that are obtained by tiling the input data in FIG. 11A successively correspond to head data, body data, and external data that are included in the output data in FIG. 11B. A manner in which the on-chip address management module in the neural network graph tiling apparatus calculates an address offset of the output data is the same as a manner of calculating an address offset of the input data.

In this embodiment of this application, the data tiling module performs processing to obtain a maximum height that is of the output data of the depth subgraph and that can be currently supported by the on-chip buffer, so that a quantity of PipeLines mapped to the depth subgraph can be decreased, thereby improving calculation efficiency.

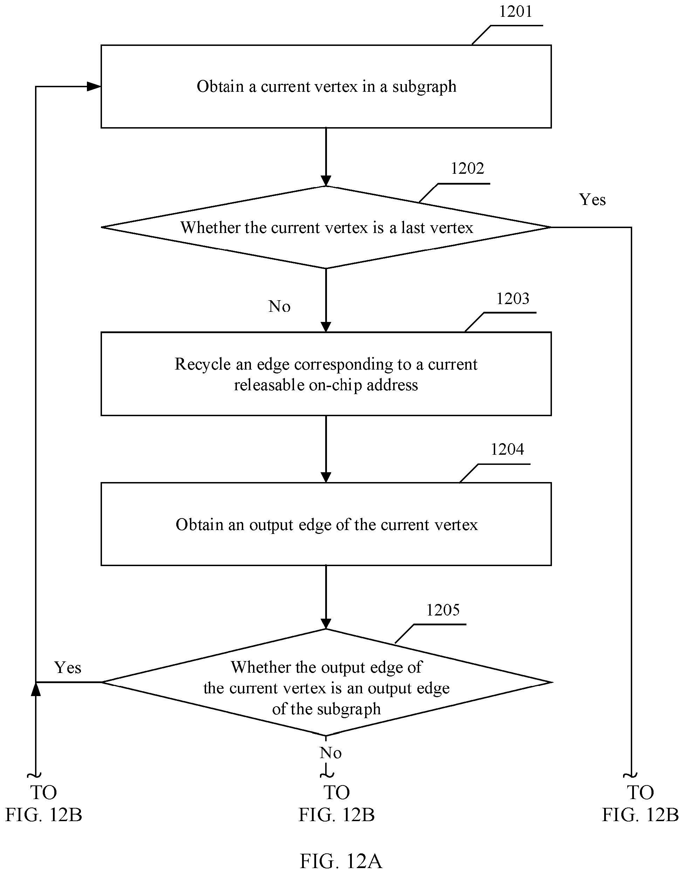

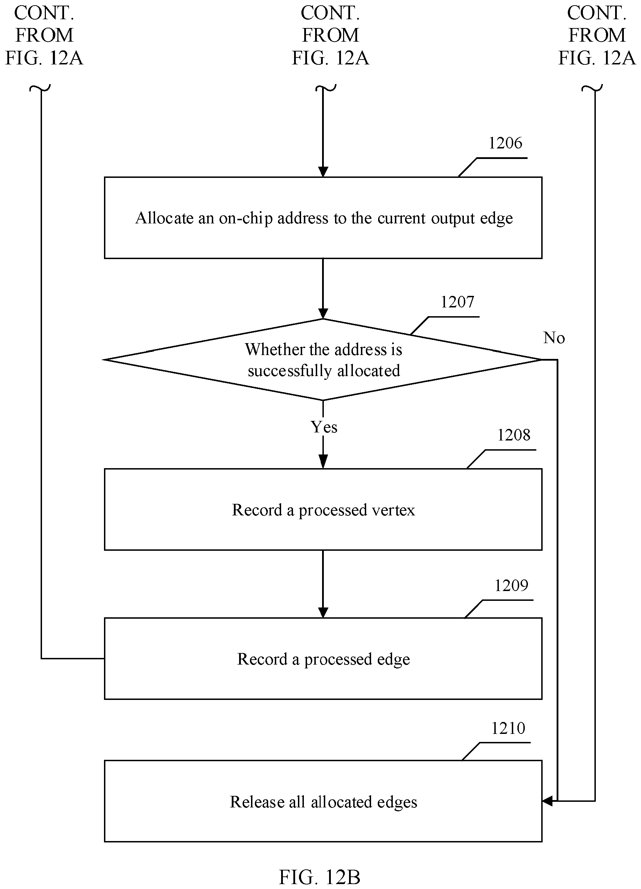

An implementation of step 703 in FIG. 7A and that of step 711 in FIG. 7B are not described in detail in the foregoing embodiment. An implementation of allocating an address of an on-chip buffer to input/output data inside a reference subgraph is described below with reference to FIG. 12A and FIG. 12B. FIG. 12A and FIG. 12B are a flowchart of an on-chip storage allocation method according to an embodiment of this application. As shown in FIG. 12A and FIG. 12B, the method may include the following steps.

1201. A neural network graph tiling apparatus obtains a current vertex.

The current vertex is a vertex that is in a subgraph and to which an on-chip address is to be allocated in current allocation. The neural network graph tiling apparatus may successively allocate storage space of an on-chip buffer to output data (that is, an output edge) of vertices in the subgraph based on a sequence of performing processing operations by the vertices.

1202. The neural network graph tiling apparatus determines whether the current vertex is a last vertex in a subgraph.

Step 1203 is performed if the current vertex is not the last vertex in the subgraph; or step 1210 is performed if the current vertex is the last vertex in the subgraph.

1203. The neural network graph tiling apparatus recycles current releasable storage space of the on-chip buffer.

The current releasable storage space of the on-chip buffer is storage space that is of the on-chip buffer and that is currently occupied by invalid data. The current releasable storage space of the on-chip buffer is recycled, so that a multiplexing rate of the on-chip address can be greatly improved.

1204. The neural network graph tiling apparatus obtains an input edge of the current vertex.

In this application, an edge is input data and output data of a vertex. An input edge is input data of the vertex, and an output edge is output data of the vertex.

1205. The neural network graph tiling apparatus determines whether an output edge of the current vertex is an output edge of the subgraph.

The output edge of the subgraph is an output edge of the last vertex in the subgraph. Using the depth subgraph in FIG. 6 as an example, output data of the vertex 4 is an output edge of the subgraph, and output data of the vertex 1 to the vertex 3 are all output edges of the vertices rather than the output edge of the subgraph. Step 1206 is performed if the output edge of the current vertex is not the output edge of the subgraph; or step 1201 is performed if the output edge of the current vertex is the output edge of the subgraph.

1206. The neural network graph tiling apparatus allocates an address of the on-chip buffer to the output edge of the current vertex.

1207. The neural network graph tiling apparatus determines whether the address of the on-chip buffer is successfully allocated to the output edge of the current vertex.

Step 1208 is performed if the address of the on-chip buffer is successfully allocated to the output edge of the current vertex; or step 1210 is performed if the address of the on-chip buffer fails to be allocated to the output edge of the current vertex.

1208. The neural network graph tiling apparatus records a processed vertex.

That the neural network graph tiling apparatus records a processed vertex may be recording the current vertex as a processed vertex.

1209. The neural network graph tiling apparatus records a processed edge.

1210. The neural network graph tiling apparatus releases all allocated edges.

That the neural network graph tiling apparatus releases all the allocated edges may be releasing storage space that is of the on-chip buffer and that is occupied by all input data and output data corresponding to the subgraph. In addition to allocating an on-chip address to the output data of the subgraph, the on-chip buffer further provides on-chip address allocation to input/output data of each vertex in the subgraph. If a specific subgraph cannot be stored in the on-chip buffer, all the allocated edges are released, and a failure is directly returned to indicate that a neural network graph cannot be tiled.

In this embodiment of this application, the neural network graph tiling apparatus allocates an on-chip address to an output edge of each vertex in the subgraph by using the memory multiplexing mechanism, which can greatly reduce on-chip address overheads, and is simple to implement.

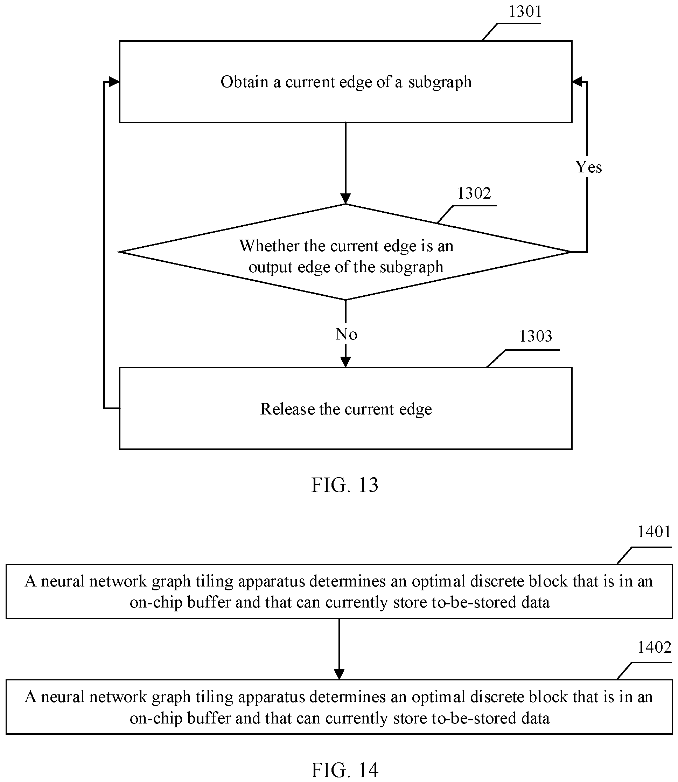

A manner in which an on-chip buffer recycles current releasable storage space of the on-chip buffer is described below. FIG. 13 shows a procedure of a method for releasing storage space of an on-chip buffer according to an embodiment of this application. As shown in FIG. 13, the method includes the following steps.

1301. A neural network graph tiling apparatus obtains a current edge of a subgraph.

The current edge is input data and output data of the current vertex. The neural network graph tiling apparatus may successively obtain edges of vertices in the subgraph in a sequence of performing processing operations by the vertices. The depth subgraph in FIG. 6 is used as an example. After performing the calculation instruction pipeline 0 of the depth subgraph, the neural network graph tiling apparatus performs the calculation instruction pipeline 1 of the depth subgraph. After performing the calculation instruction pipeline 0 of the depth subgraph, the neural network graph tiling apparatus may successively recycle storage space that is of the on-chip buffer and that is occupied by an edge (input data 0 and data 10) other than an output edge of the depth subgraph.

1302. The neural network graph tiling apparatus determines whether the current edge is an output edge of the subgraph.

Step 1301 is performed if the current edge is the output edge of the subgraph; or step 1303 is performed if the current edge is not the output edge of the subgraph.

1303. The neural network graph tiling apparatus releases storage space that is of the on-chip buffer and that is occupied the current edge.

Optionally, in a process of processing a PipeLine, the neural network graph tiling apparatus may release current available storage space of the on-chip buffer by using a memory multiplexing mechanism.

In this embodiment of this application, the neural network graph tiling apparatus releases the current available storage space of the on-chip buffer, so as to resolve a problem that storage space of the on-chip buffer is insufficient.

Some operations such as step 702, step 704, and step 708 in the foregoing embodiment relate to on-chip address allocation. An on-chip address allocation procedure is described below. The on-chip address allocation procedure may be divided into two stages. In a first stage, an optimal discrete block (that is, optimal storage space) that can currently store to-be-stored data is found from an on-chip buffer. In a second stage, address space that is in the optimal discrete block and that is relatively suitable for storing the to-be-stored data is determined. Each discrete block corresponds to continuous storage space in the on-chip buffer. FIG. 14 shows a procedure of an on-chip address allocation method according to an embodiment of this application. As shown in FIG. 14, the method may include the following steps.

1401. A neural network graph tiling apparatus determines an optimal discrete block that is in an on-chip buffer and that can currently store to-be-stored data.

The to-be-stored data may be output data or input data of a specific vertex in a subgraph. That the neural network graph tiling apparatus determines the optimal discrete block that is in the on-chip buffer and that can currently store the to-be-stored data may be as follows: An on-chip address management module performs traversal in a size sequence of currently available discrete blocks in the on-chip buffer, so as to use a smallest discrete block that can store the to-be-stored data as the optimal discrete block. A size of a discrete block is a size of storage space of the discrete block.

1402. The neural network graph tiling apparatus determines target address space in the optimal discrete block.

The target address space is used to store the to-be-stored data. In actual application, storage space of the optimal discrete block is often larger than storage space required for storing the to-be-stored data. To reduce overheads of on-chip storage space, the neural network graph tiling apparatus may allocate the target address space in the optimal discrete block to the to-be-stored data. According to a ping-pong allocation policy provided in this application, a part of space that is in the optimal discrete block and that is more suitable for storing the to-be-stored data may be further determined, so as to reduce overheads of on-chip storage space.

In this embodiment of this application, the optimal discrete block is first determined, and the target address space in the optimal discrete block is further determined, which can greatly reduce overheads of on-chip storage space.

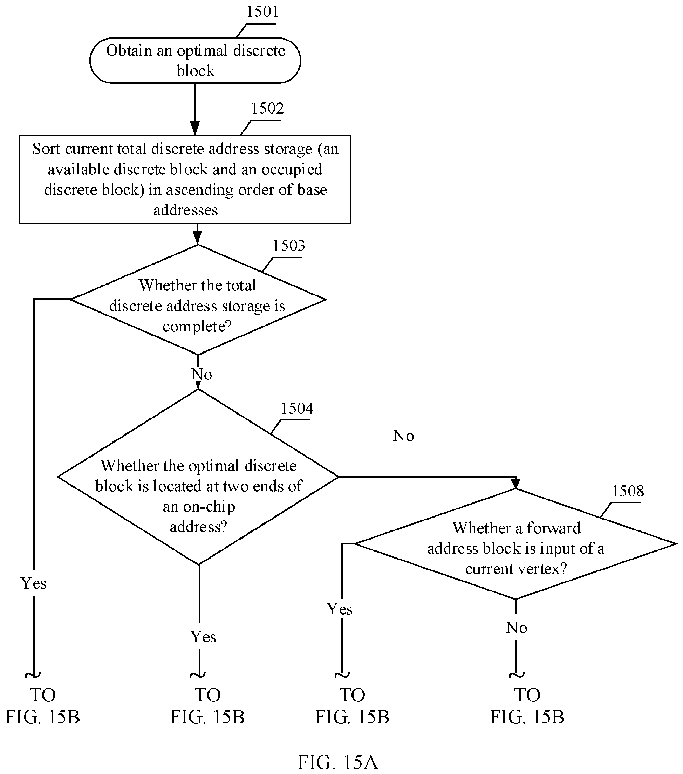

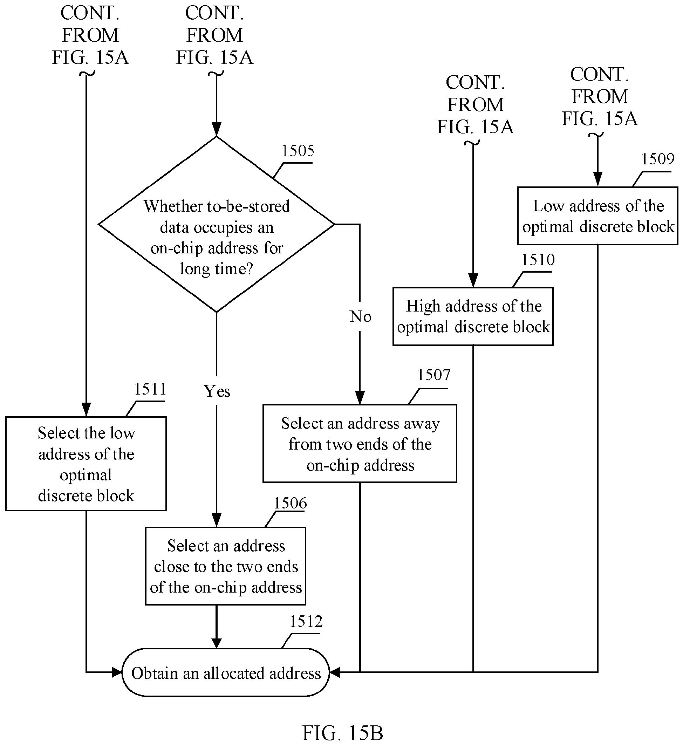

An implementation of step 1402 is not described in detail in FIG. 14. How to determine target address space in an optimal discrete block is described below with reference to FIG. 15A and FIG. 15B. FIG. 15A and FIG. 15B are a flowchart of another on-chip address allocation method according to an embodiment of this application. The method procedure in FIG. 15A and FIG. 15B is a method procedure of a ping-pong allocation policy provided in this application. As shown in FIG. 15A and FIG. 15B, the method may include the following steps.

1501. A neural network graph tiling apparatus obtains an optimal discrete block.

That the neural network graph tiling apparatus obtains the optimal discrete block may be as follows: An on-chip address management module obtains the optimal discrete block. The optimal discrete block is a discrete block to store data of a current vertex. In other words, the optimal discrete block is a discrete block determined to store the data of the current vertex.

1502. The neural network graph tiling apparatus sorts discrete blocks in an on-chip buffer in ascending order of base addresses.

The discrete blocks in the on-chip buffer include an available discrete block and an occupied discrete block.

1503. The neural network graph tiling apparatus determines whether total discrete address space of the on-chip buffer is complete.

That the neural network graph tiling apparatus determines whether the total discrete address space of the on-chip buffer is complete may be determining whether storage space of the on-chip buffer is occupied. If all storage space of the on-chip buffer is unoccupied, the total discrete address space of the on-chip buffer is complete; or if the storage space of the on-chip buffer is occupied, the total discrete address space of the on-chip buffer is incomplete. Step 1511 is performed if the total discrete address space of the on-chip buffer is complete; or step 1504 is performed if the total discrete address space of the on-chip buffer is incomplete.

1504. The neural network graph tiling apparatus determines whether the optimal discrete block is located at two ends of storage space of the on-chip buffer.

Addresses of the storage space of the on-chip buffer are successively ranked from a base address to an end address in ascending order. One end of the storage space of the on-chip buffer may be continuous storage space including the base address of the on-chip buffer, and the other end may be continuous storage space including the end address of the on-chip buffer. For example, one end of the storage space of the internal buffer may be storage space from the base address to a first address, and the other end of the storage space of the internal buffer may be storage space from a second address to the end address. A size of the storage space from the base address to the first address is one tenth, one eighth, and the like of a size of the entire storage space of the on-chip buffer, and a size of the storage space from the second address to the end address is one tenth, one eighth, and the like of the size of the entire storage space of the on-chip buffer. Step 1505 is performed if the optimal discrete block is located at the two ends of the storage space of the on-chip buffer; or step 1508 is performed if the optimal discrete block is not located at the two ends of storage space of the on-chip buffer.

1505. The neural network graph tiling apparatus determines whether to-be-stored data occupies an address of the on-chip buffer for long time.

That the neural network graph tiling apparatus determines whether the to-be-stored data occupies the address of the on-chip buffer for long time may be determining whether the to-be-stored data is required only in recently performed M PipeLines. If the to-be-stored data is required only in the recently performed M PipeLines, the neural network graph tiling apparatus determines that the to-be-stored data does not occupy the address of the on-chip buffer for long time; or if the to-be-stored data is not only required in the recently performed M PipeLines, the neural network graph tiling apparatus determines that the to-be-stored data occupies the address of the on-chip buffer for long time. M is an integer greater than 0, such as 1, 2, 3, and 4. Step 1506 is performed if the to-be-stored data occupies the address of the on-chip buffer for long time; or step 1507 is performed if the to-be-stored data does not occupy the address of the on-chip buffer for long time.

1506. The neural network graph tiling apparatus allocates storage addresses at two ends of the optimal discrete block to the to-be-stored data.

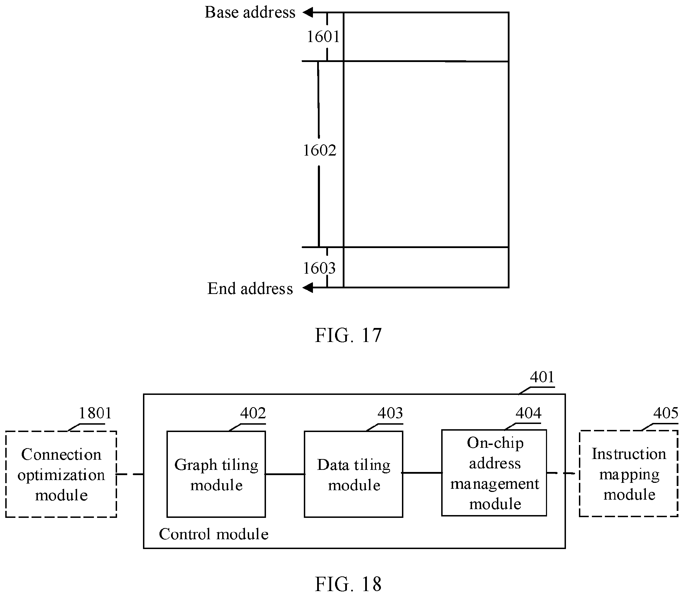

One end of the optimal discrete block may be continuous storage space including a base address of the optimal discrete block, and the other end may be continuous storage space including an end address of the optimal discrete block. FIG. 17 is a schematic diagram of an optimal discrete block according to an embodiment of this application. As shown in FIG. 17, storage addresses of the optimal discrete block are successively ranked from a base address to an end address in ascending order, 1601 is one end that is of the optimal discrete block and that includes the base address, 1603 is the other end that is of the optimal discrete block and that includes the end address, and 1602 is a storage address that is of the optimal discrete block and that is away from the two ends. For example, if a size of the optimal discrete block is 100 KB, and the to-be-stored data needs to occupy 40 KB, the neural network graph tiling apparatus allocates the first 40 KB or the last 40 KB in the 100 KB. In other words, when the to-be-stored data needs to occupy a part of storage space in the optimal discrete block for long time, an address that is of the optimal discrete block and that is near the two ends is selected. In this way, a part of continuous space can be left to store other data, so as to make full use of address space.

1507. The neural network graph tiling apparatus allocates, to the to-be-stored data, a storage address that is of the optimal discrete block and that is away from the two ends.

The storage address that is of the optimal discrete block and that is away from the two ends is a storage address, other the storage addresses at the two ends of the optimal discrete block, that is in the storage addresses corresponding to the optimal discrete block. The storage address that is of the optimal discrete block and that is away from the two ends is allocated to the to-be-stored data that does not need to occupy storage space for long time, so that this part of address is recycled in time.

1508. The neural network graph tiling apparatus determines whether a forward address block stores input data of a current vertex.

The forward address block (corresponding to third storage space) is a discrete block, in the storage space of the on-chip buffer, that is adjacent to the optimal discrete block (corresponding to second storage space) and that is located before the optimal discrete block. The to-be-stored data may be output data of the current vertex. Step 1510 is performed if the forward address block stores the input data of the current vertex; or step 1509 is performed if the forward address block does not store the input data of the current vertex.

1509. The neural network graph tiling apparatus allocates a low address (corresponding to a third address) of the optimal discrete block to the to-be-stored data.

The low address of the optimal discrete block may be half of the addresses that includes the base address, and a high address of the optimal discrete block may be the other half of the addresses that includes the end address. For example, if a size of the optimal discrete block is 100 KB, and the to-be-stored data needs to occupy 40 KB, the neural network graph tiling apparatus allocates the first 40 KB in the 100 KB.

1510. The neural network graph tiling apparatus allocates a high address (corresponding to a fourth address) of the optimal discrete block to the to-be-stored data.

When the forward address block stores the input data of the current vertex, the high address of the optimal discrete block is allocated to the to-be-stored data, when the forward address block is released, larger continuous storage space may be formed for storage space corresponding to the low address of the optimal discrete block.

1511. The neural network graph tiling apparatus allocates a low address of the optimal discrete block to the to-be-stored data.

1512. The neural network graph tiling apparatus obtains an allocated address.

In this embodiment of this application, when the storage space of the optimal discrete block is larger than the storage space required for storing the to-be-stored data, it is determined that the optimal discrete block is more suitable for storing the to-be-stored data, so as to further decrease a quantity of discrete blocks in the on-chip buffer.

The foregoing embodiment describes an implementation in which the neural network graph tiling apparatus performs graph tiling (that is, first-level graph tiling) on a neural network graph by using the neural network graph tiling processing system in FIG. 3A to obtain a direct subgraph and a depth subgraph. An implementation of performing graph tiling (that is, second-level graph tiling) on a depth subgraph whose depth is not less than a first threshold is described below.

After tiling the neural network graph to obtain the depth subgraph (that is, a first-order subgraph), the neural network graph tiling apparatus further performs the following operations:

when a quantity of vertices included in the depth subgraph is not less than the first threshold, tiling the depth subgraph to obtain a first second-order subgraph and a second second-order subgraph, where the first second-order subgraph is used to represent a first second-order subnetwork, the second second-order subgraph is used to represent a second second-order subnetwork, both the first second-order subnetwork and the second second-order subnetwork are included in the depth subnetwork, and vertices included in the first second-order subnetwork are all different from vertices included in the second second-order subnetwork. Input data of the first second-order subnetwork is the first input data, output data of the second second-order subnetwork is the first output data, the first second-order subnetwork is configured to store, into a middle buffer, first intermediate data obtained by processing the first input data, the second second-order subnetwork is configured to process the first intermediate data obtained from the middle buffer, and the middle buffer is not the on-chip buffer, that is, the middle buffer is located outside an AI chip The middle buffer is an off-chip buffer whose reading and writing speed is lower than that of the on-chip buffer, and the reading and writing speed of the middle buffer is faster than that of an external memory, such as a DDR.

For example, a manner in which the neural network graph tiling apparatus tiles the depth subgraph to obtain the first second-order subgraph and the second second-order subgraph is as follows: determining at least one reference vertex that is in a plurality of vertices included in the depth subgraph and whose output data needs to occupy storage space smaller than available storage space of the middle buffer; and tiling the depth subgraph by using an output of an intermediate vertex in the at least one reference vertex as a tiling point to obtain the first second-order subgraph and the second second-order subgraph, where the intermediate vertex is any reference vertex in the at least one reference vertex, output data of the intermediate vertex is output data of the first second-order subgraph and is input data of the second second-order subgraph. It should be understood that the neural network graph tiling apparatus may further tile, in another manner, at least one depth subgraph whose depth is not less than the first threshold to obtain at least two second-order subgraphs. This is not limited in this embodiment of this application. The depth subgraph may be any depth subgraph obtained by tiling the neural network graph. It should be understood that the neural network graph tiling apparatus may tile, in a similar manner, each depth subgraph whose depth is not less than the first threshold. Optionally, the neural network graph tiling apparatus performs a subgraph address allocation attempt (refer to FIG. 7A and FIG. 7B), by using available storage space of the on-chip buffer, on the second-order subgraph obtained by tiling the depth subgraph. If data does not need to be tiled, the second-order subgraph is a direct subgraph; or if data needs to be tiled, the second-order subgraph is a depth subgraph. In some embodiments, after tiling the depth subgraph to obtain at least two second-order subgraphs, the neural network graph tiling apparatus may control, by using the control module 401, the on-chip address management module 404 to allocate an address to the obtained second-order subgraph to obtain address allocation information. An implementation method is similar to a manner of allocating an address to each of the depth subgraph and the direct subgraph. Details are not described herein again.

Optionally, before tiling the depth subgraph by using the output of the intermediate vertex in the at least one reference vertex as a tiling point to obtain the first second-order subgraph and the second second-order subgraph, the neural network graph tiling apparatus may perform the following operations: obtaining a depth difference between two second-order subgraphs that are obtained by tiling the depth subgraph by separately using the at least one reference vertex as a tiling point, to obtain at least one depth difference, where the at least one reference vertex is in a one-to-one correspondence with the at least one depth difference; and determining that the output of the intermediate vertex that is in the at least one reference vertex and that corresponds to a depth difference less than a depth difference threshold is used as a tiling point to tile the depth subgraph. Optionally, it is determined that the intermediate vertex that is in the at least one reference vertex and that corresponds to a minimum depth difference is used as a tiling point to tile the depth subgraph. The depth difference threshold may be 1, 2, 3, or the like. For example, vertices in the depth subgraph are successively a vertex 1, a vertex 2, a vertex 3, a vertex 4, and a vertex 5 in an execution sequence. A second-order subgraph (whose depth is 1) including the vertex 1 and a second-order subgraph (whose depth is 4) including the vertex 2, the vertex 3, the vertex 4, and the vertex 5 may be obtained by tiling the depth subgraph by using an output of the vertex 1 as a tiling point. A depth difference between the two second-order subgraphs is 3. For example, vertices in the depth subgraph are successively a vertex 1, a vertex 2, a vertex 3, a vertex 4, and a vertex 5 in an execution sequence. A second-order subgraph (whose depth is 3) including the vertex 1, the vertex 2, and the vertex 3 and a second-order subgraph (whose depth is 2) including the vertex 4 and the vertex 5 may be obtained by tiling the depth subgraph by using an output of the vertex 3 as a tiling point. A depth difference between the two second-order subgraphs is 1. In this implementation, the depth subgraph can be quickly tiled into two second-order subgraphs between which a depth difference is less than the depth difference threshold.

An example of tiling a depth subgraph whose tiling depth is not less than the first threshold is described below. After completing first-level graph tiling on the neural network graph, the neural network graph tiling apparatus may retain an address of input data and an address of output data of each depth subgraph and each direct subgraph.

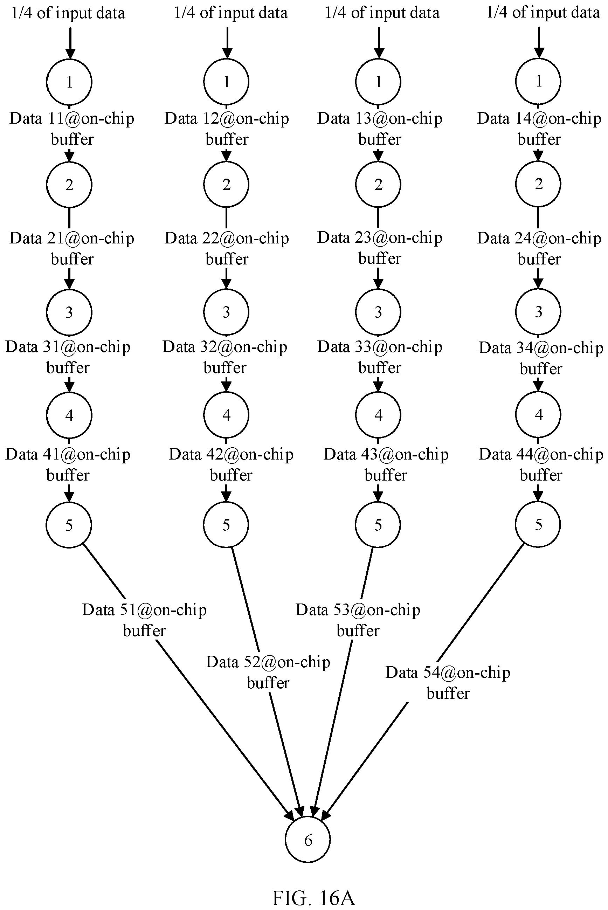

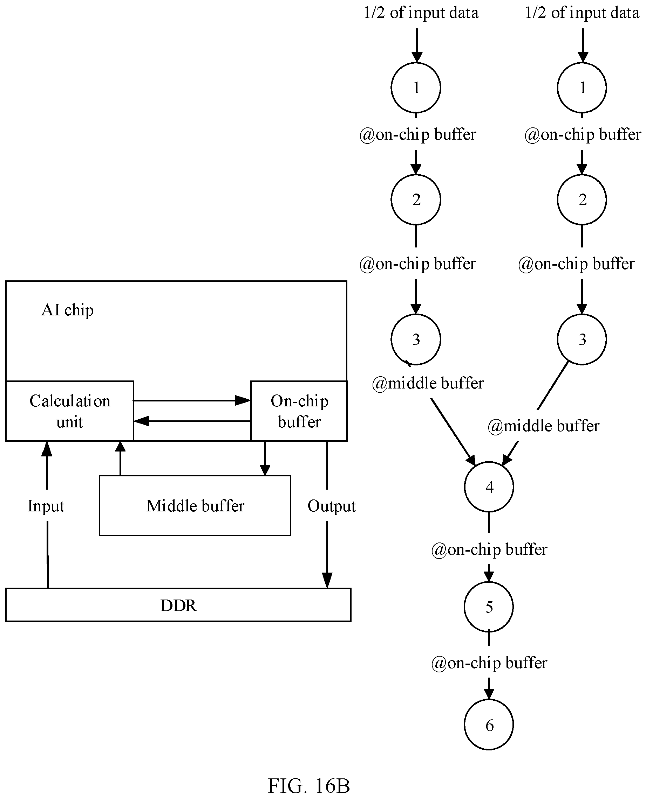

It is assumed that after tiling the neural network graph, the neural network graph tiling apparatus obtains a depth subgraph including a vertex 1 to a vertex 5 and a direct subgraph including a vertex 6. The neural network graph tiling apparatus may first determine a specific vertex that is in the depth subgraph and whose output data can be stored into the middle buffer. A specific process is as follows: The neural network graph tiling apparatus determines whether an internal output in the depth subgraph, such as output data of the vertex 1, the vertex 2, the vertex 3, and the vertex 4, can be placed into the middle buffer, and then selects each vertex whose output data can be placed into the middle buffer, to obtain an output list. A depth difference between two second-order subgraphs obtained by tiling the depth subgraph is calculated based on the output list. For example, the depth subgraph is tiled by using an output of an OP 1 as a tiling point to tile to obtain two second-order subgraphs. One second-order subgraph includes the vertex 1 and has a depth of 1, and the other second-order subgraph includes the vertex 2 to the vertex 5 and has a depth of 4. In this case, a depth difference between the second-order subgraphs is 3. By analogy, a corresponding depth difference obtained when the output of the OP 1 is used as a tiling point is 3, a corresponding depth difference obtained when an output of an OP 2 is used as a tiling point is 1, a corresponding depth difference obtained when an output of an OP 3 is used as a tiling point is 1, and a corresponding depth difference obtained when an output of an OP 4 is used as a tiling point is 3. For example, an output of a vertex whose depth difference is minimum and whose output data is relatively large is determined from the OPs as a tiling point. For example, in this example, the depth difference of the output of the OP 2 and that of the output of the OP 3 are both 1. If the output of the OP 3 is greater than the output of the OP 2, the output of the OP 3 is used as a tiling point of the depth subgraph, and the output of the OP 3 is set in the middle buffer. In this way, two second-order subgraphs may be formed: (OP 1-OP 3) and (OP 4-OP 5). Each second-order subgraph obtained by tiling a depth subgraph may be a direct subgraph, or may be a depth subgraph. Optionally, after obtaining at least one direct subgraph by tiling the depth subgraph, the neural network graph tiling apparatus may combine a direct subgraph before the at least one direct subgraph, the at least one direct subgraph, and a direct subgraph after the at least one direct subgraph to form a new direct subgraph. For example, in FIG. 16B, a second-order subgraph OP 4-OP 5 and a first-order subgraph OP 6 are combined to form a new direct subgraph OP 4-OP 6 (data is read from the middle buffer). Optionally, the neural network graph tiling apparatus may compile all final subgraphs based on a result obtained after subgraph combination, to form an AI chip-executable file (which includes a chip instruction, a reading and writing address, and the like).

In some embodiments, if N of depth subgraphs obtained by tiling the neural network graph by the neural network graph tiling apparatus has a depth not less than the first threshold, any one depth subgraph, two depth subgraphs, three depth subgraph, ..., (N-1) depth subgraphs, and N depth subgraphs in the N depth subgraphs are tiled in the foregoing manner, so that W neural network graph tiling results can be obtained. There are (W+1) cases in total plus a case in which second-level graph tiling is not performed. In some embodiments, the neural network graph tiling apparatus may separately generate AI chip-executable files corresponding to the (W+1) neural network graph tiling results, and separately test, by using test data, execution time of processing the test data by each AI chip-executable file. The neural network graph tiling apparatus may compare the execution time of the (W+1) AI chip-executable files (calculated input data has a same scale), and select a smallest case as a final result to be deployed on a terminal device (such as a mobile phone or a smart monitoring device) or even on a cloud. As a whole, for a specific neural network graph tiling result, because a depth of the depth subgraph becomes smaller, an amount of repeatedly calculated data (for example, overlapping brought by a convolution operator) is decreased, thereby further improving entire network performance.

A difference between a calculation form of a vertex included in a depth subgraph (that is, a first-order depth subgraph) and a calculation form of a vertex included in a second-order subgraph is described below with reference to accompany drawings.

FIG. 16A shows a calculation form based on on-chip single-level storage in an AI chip according to an embodiment of this application. It can be learned from FIG. 16A that a depth subnetwork includes a vertex 1 to a vertex 5, input data of the depth subnetwork is tiled into four pieces of data, that is, the depth subnetwork corresponds to four PipeLines. A direct subnetwork includes a vertex 6, output data of the depth subnetwork (that is, output data of the vertex 5) is stored into an on-chip buffer, and the direct subnetwork reads data from the on-chip buffer. The vertex 1 reads data from a DDR or reads data from the on-chip buffer, and the vertex 5 writes output data into the on-chip buffer or the DDR. If the vertex 1 is a vertex that is in a neural network graph and that first performs a processing operation, the vertex 1 reads data from the DDR; or if the vertex 1 is not a vertex that is in a neural network graph and that first performs a processing operation, the vertex 1 reads data from the on-chip buffer. If the vertex 6 is a vertex that is in a neural network graph and that last performs a processing operation, the vertex 6 writes output data into the DDR; or if the vertex 6 is not a vertex that is in a neural network graph and that last performs a processing operation, the vertex 6 writes output data into the on-chip buffer. A processing procedure performed by the vertices in FIG. 16A is as follows: (1) 1/4 of a Tensor (that is, 1/4 of input data) is read and is successively calculated by the vertex 1, the vertex 2, the vertex 3, the vertex 4, and the vertex 5, a calculation result of the vertex 5 (that is, 1/4 of a calculation result) is stored into the on-chip buffer. Data is read from the DDR or the on-chip buffer, and address reading and writing is completed in the on-chip buffer. (2) Subsequent 1/4 of the Tensor is read and is successively calculated by the vertex 1, the vertex 2, the vertex 3, the vertex 4, and the vertex 5, and a calculation result of the vertex 5 (that is, 1/4 of the calculation result) is stored into the on-chip buffer. (3) Subsequent 1/4 of the Tensor is read and is successively calculated by the vertex 1, the vertex 2, the vertex 3, the vertex 4, and the vertex 5, and a calculation result of the vertex 5 (that is, 1/4 of the calculation result) is stored into the on-chip buffer. (4) Subsequent 1/4 of the Tensor is read and is successively calculated by the vertex 1, the vertex 2, the vertex 3, the vertex 4, and the vertex 5, and a calculation result of the vertex 5 (that is, 1/4 of the calculation result) is stored into the on-chip buffer. (5) A complete Tensor (that is, a complete calculation result that is output by the vertex 5) is read from the on-chip buffer, and is calculated by the vertex 6, and a calculation result is stored into the DDR or the on-chip buffer.

FIG. 16B shows a calculation form based on multi-level storage in an AI chip according to an embodiment of this application. In FIG. 16B, a calculation process performed by the AI chip is as follows: (1) The AI chip reads to-be-processed data (Input) from a DDR. (2) The AI chip performs calculation by using a PipeLine corresponding to a depth subgraph or a direct subgraph as a basic unit, so as to complete calculation OP-by-OP, where calculation results of a plurality of PipeLines of at least one depth subgraph are aggregated into a middle buffer, and the PipeLine of the direct subgraph reads and writes an on-chip buffer or the middle buffer. (3) After completing calculation of an entire NN, the AI chip stores a result into the DDR. FIG. 16B shows an example of a calculation form of a second-order subnetwork obtained by tiling the depth subgraph in FIG. 16A. It can be learned from FIG. 16B that the depth subnetwork in FIG. 16A is tiled into a first second-order subnetwork (a depth subnetwork) including the vertex 1, the vertex 2, and the vertex 3, and a second second-order subnetwork (a direct subnetwork) including the vertex 4 and the vertex 5. Input data of the first second-order subnetwork is tiled into two pieces of data, that is, the first second-order subnetwork corresponds to two PipeLines. Output data of the first second-order subnetwork (that is, output data of the vertex 3) is stored into the middle buffer, and the second second-order subnetwork reads the data from the middle buffer. The vertex 1 reads data from the DDR or reads data from the on-chip buffer, and the vertex 5 writes output data into the on-chip buffer or the DDR. If the vertex 1 is a vertex that is in a neural network graph and that first performs a processing operation, the vertex 1 reads data from the DDR; or if the vertex 1 is not a vertex that is in a neural network graph and that first performs a processing operation, the vertex 1 reads data from the on-chip buffer. For example, a neural network graph tiling apparatus tiles the depth subnetwork in FIG. 16A by using an output of the vertex 3 as a tiling point of the depth subnetwork, to obtain a second-order subnetwork including the vertex 1 to the vertex 3 and a second-order subnetwork including the vertex 4 and the vertex 5, and combines the second-order subnetwork including the vertex 4 and the vertex 5 and the direct subnetwork including the vertex 6 to obtain a new direct subnetwork including the vertex 4 to the vertex 6. It can be learned from comparison between FIG. 16A and FIG. 16B that processing operations implemented by a plurality of second-order subgraphs obtained by tiling any depth subnetwork are the same as processing operations implemented by the depth subnetwork.

Because a middle buffer that can be read and written is introduced into a calculation process, a processing procedure performed by the vertices in FIG. 16B is as follows: (1) 1/2 of Tensor input (that is, 1/2 of input data) is read and is calculated by the vertex 1, the vertex 2, and the vertex 3, and a calculation result of the vertex 3 (that is, 1/2 of a calculation result) is stored into the middle buffer, where the input is from the DDR or the on-chip buffer, and address reading and writing is completed in the on-chip buffer. (2) Subsequent 1/2 of the Tensor (that is, subsequent 1/2 of the input data) is read and is calculated by the vertex 1, the vertex 2, and the vertex 3, and a calculation result of the vertex 3 (that is, 1/2 of the calculation result) is stored into the middle buffer. (3) A complete Tensor (that is, a complete calculation result that is output by the vertex 3) is read from the middle buffer and is calculated by the vertex 4, the vertex 5, and the vertex 6, and a calculation result is written into the DDR or the on-chip buffer.

Theoretically, a quantity of pieces of data obtained by tiling data when the vertex included in the second-order subgraph performs a processing operation should be less than a quantity of pieces of data obtained by tiling data when the vertex included in the first-order subgraph performs a processing operation. Therefore, an amount of repeatedly loaded data in the calculation process of the AI chip can be decreased in overall. Examples in FIG. 16A and FIG. 16B are used for description. A second-order subgraph OP 1-OP 3 is a depth subgraph, a second-order subgraph OP 4-OP 5 is a direct subgraph, and a quantity of pieces of data obtained by tiling data is decreased to two. When a depth of the depth subgraph is deeper, an overlapping part between data obtained after tiling is larger, and a larger additional calculation amount is brought. As a result, specific calculation performance is lost. Therefore, in the solution provided in this embodiment of this application, a depth subgraph whose depth is not less than the first threshold is re-optimized to obtain a second-order subgraph, which can greatly reduce a calculation amount of an overlapping part. In addition, and relatively moderate reading and writing performance of the middle buffer is used to compensate for reading and writing weakness of external storage, so as to improve overall calculation performance.

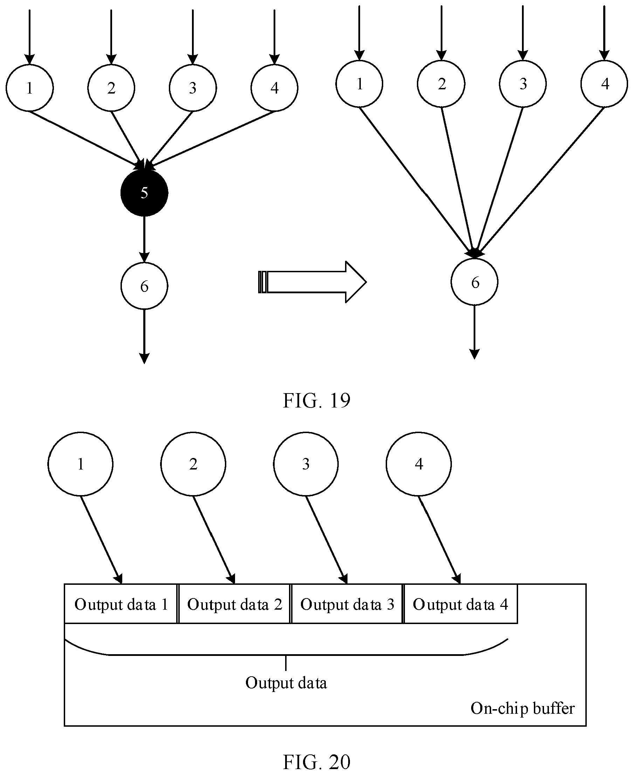

To reduce storage load of the on-chip buffer, a Concat vertex optimization solution is introduced in this application. A schematic diagram of a structure of a neural network graph tiling apparatus is shown in FIG. 18. The neural network graph tiling apparatus further includes a Concat optimization module configured to eliminate a Concat vertex in the neural network graph. A connection optimization module 1801 in FIG. 18 is the Concat optimization module. A function of the Concat vertex in the neural network graph is concatenating output data of at least two vertices in the neural network graph, and transmitting obtained one piece of output data to one or more vertices in the neural network graph. The Concat vertex optimization solution is described as follows: An output address of an input operator of the Concat vertex is directly mapped to an output address of a corresponding Concat vertex, to achieve a data concatenation effect of the Concat vertices. A form change shown in the neural network by the Concat vertex optimization solution may be shown in FIG. 19. The Concat vertex may be eliminated in a structure of the neural network, that is, the Concat vertex does not need to be mapped to a corresponding AI chip instruction. FIG. 19 includes six vertices, that is, a vertex 1 to a vertex 6. The vertex 5 is a Concat vertex, and a function of the vertex 5 is concatenating output data of the vertices 1 to 4 into one piece of output data, and outputting the piece of output data to the vertex 6. After Concat vertex optimization, the output data of the vertex 1 to the vertex 4 can be directly output to the vertex 6, so that the Concat vertex is eliminated. In the Concat vertex optimization solution, output data of vertices (the output data of these vertices is input data of the Concat vertex) connected to the Concat vertex is used as output data of the Concat vertex in an address of the on-chip buffer. FIG. 20 is a schematic diagram of optimizing on-chip storage by a Concat vertex according to an embodiment of this application. As shown in FIG. 20, output addresses (that is, addresses corresponding to output data 1 to output data 4) of an OP 1, an OP 2, an OP 3, and an OP 4 all correspond to local output addresses of the Concat vertex. The OP 1, the OP 2, the OP 3, and the OP 4 are successively a vertex 1 to a vertex 4 in FIG. 20. In other words, the output addresses of the OP 1, the OP 2, the OP 3, and the OP 4 are connected to each other end-by-end, that is, the output addresses form an output address of the Concat vertex. After calculation of the OP 1, the OP 2, the OP 3, and the OP 4 is completed, calculation of the OP 6 (the vertex 6) can be directly entered without performing an operation of the Concat vertex, such as the OP 5 (the vertex 5).

In actual application, in a process of allocating an address of the on-chip buffer to internal input/output data inside a reference subgraph, if a function of a specific vertex in the reference subgraph is transmitting, to one or more vertices in the reference subgraph, target data obtained by concatenating output data of at least two vertices in the reference subgraph, an address of the output data of the at least two vertices in the on-chip buffer is used as an address of output data of the vertex.

When the foregoing solution is used, the following objectives can be achieved: (1) Occupied on-chip storage space is reduced, and entire network integration gains are improved. (2) Input data of the Concat vertex is prevented from being migrated, thereby further improving entire network calculation performance of the neural network.

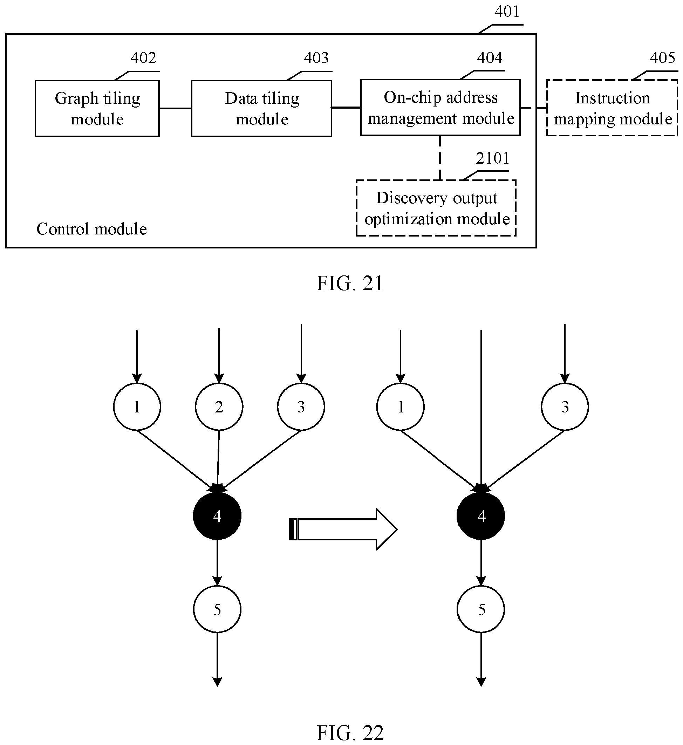

To further reduce occupied storage space of the on-chip buffer and reduce a calculation amount, this application provides a DetectionOutput vertex optimization solution based on the foregoing embodiment. A schematic diagram of a structure of a neural network graph tiling apparatus is shown in FIG. 21. The neural network graph tiling apparatus further includes a DetectionOutput optimization module, that is, a discovery output optimization module 2101 in FIG. 21. FIG. 22 is a schematic diagram of a structure change in a neural network before and after DetectionOutput vertex optimization according to an embodiment of this application. In FIG. 22, a left neural network including a vertex 1 to a vertex 5 is a neural network before optimization, and a right neural network is a neural network after optimization. The vertex 4 is a DetectionOutput vertex.

Using FIG. 22 as an example, the DetectionOutput vertex optimization solution is as follows: An operator of the DetectionOutput vertex (the vertex 4) has three inputs (that is, outputs of the vertex 1 to the vertex 3), but one of the inputs (the output of the vertex 2) is only related to a structural dimension of the neural network and is unrelated to an input of the neural network. Therefore, the neural network graph tiling apparatus may obtain the input through offline calculation in advance, and store the input into an offline model. When the DetectionOutput vertex optimization solution is used, at least one input of the DetectionOutput vertex does not need to be calculated online, and only needs to be loaded. Therefore, occupied on-chip storage is reduced to a specific extent. A change in a structural diagram of an optimized neural network is shown in FIG. 22. Instead of obtaining a result through calculation by the vertex 2, the shown result is directly loaded from an external memory.

In actual application, before a neural network graph is tiled, the foregoing DetectionOutput vertex optimization solution may be used to process the neural network graph.

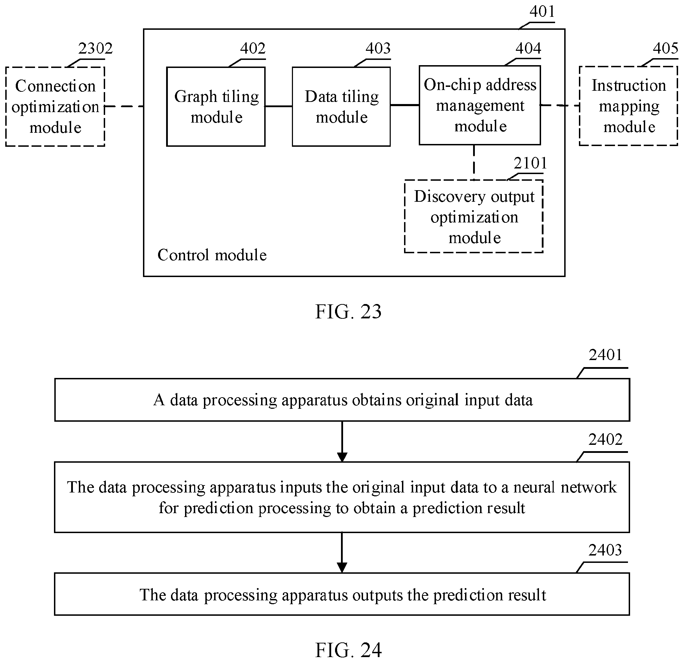

In this embodiment of this application, the Concat vertex optimization solution and the DetectionOutput vertex optimization solution in the neural network may be separately introduced into this embodiment, or may be simultaneously introduced into this embodiment. FIG. 23 is a schematic diagram of a structure of another neural network graph tiling apparatus according to an embodiment of this application. As shown in FIG. 23, based on the neural network graph tiling apparatus in FIG. 4, a discovery output optimization module 2301 and a connection optimization module 2302 are added. The output optimization module 2301 is configured to implement the DetectionOutput vertex optimization solution. The output optimization module 2302 is configured to implement the Concat vertex optimization solution.

The foregoing embodiment describes a manner in which a neural network graph is tiled to obtain a depth subgraph and a direct subgraph, and two types of subgraphs obtained through tiling are mapped to AI chip instructions by using a unified Pipeline form. A neural network corresponding to a group of AI chip instructions in a computer device, that is, the group of AI chip instructions is run to implement a function of the neural network. In the method in the foregoing embodiment, a group of AI chip instructions corresponding to the neural network may be adjusted to another group of AI chip instructions. Compared with the group of AI chip instructions before adjustment, the adjusted group of AI chip instructions implements a same processing operation, but a quantity of times of accessing an external memory is greatly decreased and power consumption is greatly reduced. In actual application, a computer device such as a server or a terminal may implement a processing operation by using AI chip instructions corresponding to a depth subgraph and a direct subgraph. A manner of executing a target task by using a depth subgraph (corresponding to a depth subnetwork) and a direct subgraph (corresponding to a direct subnetwork) that are obtained by tiling a neural network graph (corresponding to a neural network) is described below.

FIG. 24 is a flowchart of a prediction method according to an embodiment of this application. As shown in FIG. 24, the method includes the following steps.

2401. A data processing apparatus obtains original input data.

The original input data includes one or more signals that can be processed by a computer. The plurality of signals that can be processed by a computer include at least one of a voice signal, a text signal, or an image signal. Optionally, the original input data is image data, such as a face image. The data processing apparatus may be a terminal, a server, and another computer device. That the data processing apparatus obtains the original input data may be as follows: The data processing apparatus obtains the original input data from another device such as a server through a communications interface; or collects image data by using a camera to obtain the original input data; or collects voice data by using an audio device to obtain the original input data.

2402. The data processing apparatus inputs the original input data to a neural network for prediction processing to obtain a prediction result.

The prediction processing may be prediction processing that can be implemented by the neural network, such as face detection, face feature point detection, image enhancement, super-resolution processing of an image, natural voice text processing, and semantic tiling of an image. Correspondingly, the prediction result may be a prediction result that can be obtained by the neural network, such as a face detection result, a face feature point detection result, an enhanced image, an image obtained after super-resolution processing, a natural language text processing result, and a semantic tiling result of an image.

The prediction processing includes: successively inputting, to a depth subnetwork for processing, at least two groups of data obtained by tiling first input data, where the depth subnetwork is included in the neural network and includes a part of vertices in the neural network, each vertex represents a calculation unit in the neural network, and a plurality of vertices included in the depth subnetwork exchange data with each other by reading and writing an on-chip buffer, and the first input data is obtained in the process of inputting the original input data to the neural network for prediction processing. For a specific example of this process, refer to FIG. 2. Input data 0, input data 1, and input data 3 are three groups of data obtained by tiling the first input data. The depth subnetwork (that is, a subnetwork including a vertex 1 and a vertex 2 in FIG. 2) first processes the input data 0, and stores obtained output data 20 into a buffer; then processes the input data 1, and stores obtained output data 21 into the buffer; and finally processes the input data 3, and stores obtained output data 22 into the buffer. It can be understood that each of the plurality of vertices included in the depth subnetwork performs at least two processing operations in a process of processing the first input data. Optionally, storage space required by the first input data is larger than available storage space of the on-chip buffer, and storage space required by each of the at least two groups of data is not larger than the available storage space of the on-chip buffer. It can be understood that when the storage space required by the first input data is larger than the available storage space of the on-chip buffer, the first input data is tiled into at least two groups of data for successive processing, so that storage space required by each group of data is not larger than the available storage space of the on-chip buffer, thereby avoiding accessing an external memory.

The prediction processing further includes: processing, by a direct subnetwork, second input data as a whole, where the direct subnetwork is included in the neural network and includes a part of vertices in the neural network, and the second input data is obtained in the process of inputting the original input data to the neural network for prediction processing. For a specific example of this process, refer to FIG. 2. The direct subnetwork (that is, a subnetwork including a vertex 3 and a vertex 4 in FIG. 2) processes the input data 0, the input data 1, and the input data 3 as a whole. Because the direct subnetwork processes input data of the direct subnetwork as a whole, at least one vertex in the direct subnetwork performs one processing operation in a process of processing the second input data. Optionally, storage space required by the second input data is not larger than the available storage space of the on-chip buffer. In this way, the direct subnetwork needs to occupy only the on-chip buffer when processing the second input data.

It can be understood that neither the depth subnetwork nor the direct subnetwork needs to access the external memory in a process of processing their respective input data. In some embodiments, inputting the original input data to the neural network for prediction processing to obtain the prediction result may be understood as: inputting, for processing, the original input data to a depth subnetwork and a direct subnetwork that are obtained by tiling the neural network. Actually, the depth subnetwork and the direct subnetwork are merely abstracted concepts, and the depth subnetwork and the direct subnetwork correspond to two different forms of processing procedures in a process in which the neural network performs prediction processing on the original input data. In other words, the depth subnetwork implements some processing operations of the neural network, and the direct subnetwork also implements some processing operations of the neural network. It can be understood that each depth subnetwork and each direct subnetwork that are obtained by tiling the neural network are used to implement some operations of the neural network, and these depth subnetworks and direct subnetworks can implement a function of the neural network.

In some embodiments, the prediction processing further includes: processing, by a third second-order subnetwork, fourth input data to obtain second intermediate data; and storing the second intermediate data into a middle buffer, where the middle buffer is not the on-chip buffer; and processing, by a fourth second-order subnetwork, the second intermediate data obtained from the middle buffer to obtain fourth output data, where both the third second-order subnetwork and the fourth second-order subnetwork are included in the neural network, vertices included in the third second-order subnetwork are all different from vertices included in the fourth second-order subnetwork, and the fourth input data is obtained in the process of inputting the original input data to the neural network for prediction processing. A plurality of vertices included in the third second-order subnetwork exchange data with each other by reading and writing the on-chip buffer, and a plurality of vertices included in the fourth second-order subnetwork exchange data with each other by reading and writing the on-chip buffer. Optionally, both a quantity of vertices included in the third second-order subnetwork and a quantity of vertices included in the fourth second-order subnetwork are less than a first threshold. For example, the middle buffer is an off-chip buffer whose reading and writing speed is lower than that of the on-chip buffer, and reading and writing performance of the middle buffer is better than that of the external memory, such as a DDR. An example of the third second-order subnetwork is a depth subnetwork including a vertex 1, a vertex 2, and a vertex 3 in FIG. 16B, and an example of the fourth second-order subnetwork is a direct subnetwork including a vertex 4, a vertex 5, and a vertex 6 in FIG.

16B. In these embodiments, the data processing apparatus includes the on-chip buffer, the middle buffer, and the external memory. In a process of performing prediction processing, the data processing apparatus does not need to access the external memory, and can implement prediction processing by reading and writing the on-chip buffer and the middle buffer, thereby reducing power consumption.

In some embodiments, the data processing apparatus may have two working modes. In a first working mode, the data processing apparatus only reads and writes the on-chip buffer when inputting the original input data to the neural network for prediction processing. In a second working mode, the data processing apparatus reads and writes the on-chip buffer and the middle buffer when inputting the original input data to the neural network for prediction processing. Optionally, the data processing apparatus may store two AI chip-executable files. The data processing apparatus performs prediction processing in the first working mode when executing one AI chip-executable file, and the data processing apparatus performs prediction processing in the second working mode when executing the other AI chip-executable file. The data processing apparatus may switch a working mode based on a control instruction from a user. It should be understood that power consumption of the first working mode is lower than that of the second working mode, and calculation efficiency of the second working mode is higher than that of the first working mode. The two working modes have different advantages, and a user may set a corresponding working mode based on an actual requirement. For example, if the data processing apparatus uses the first working mode, an example of a processing procedure performed by the data processing apparatus is a processing procedure in FIG. 16A. Alternatively, if the data processing apparatus uses the second working mode, an example of a processing procedure performed by the data processing apparatus is a processing procedure in FIG. 16B.

2403. The data processing apparatus outputs the prediction result.

The neural network does not need to access the external memory in a process of performing prediction processing on the original input data, so that power consumption of the data processing apparatus can be effectively reduced. It can be learned that the data processing apparatus may run various prediction methods such as face detection and face feature point detection in an ultra-low power consumption form in a screen-off scenario and the like.

In this embodiment of this application, in the process of inputting the original input data to the neural network for prediction processing, the depth subnetwork is used to execute a processing task of the neural network. Because the depth subnetwork does not need to access the external memory in a process of processing input data of the depth subnetwork, a quantity of times of accessing the external memory can be greatly decreased, and power consumption can be reduced.

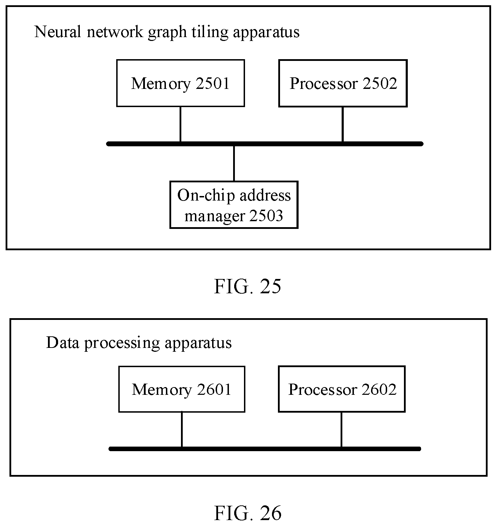

FIG. 25 shows another neural network graph tiling apparatus according to an embodiment of this application. As shown in FIG. 25, the apparatus includes a memory 2501 and a processor 2502. The memory 2501 is configured to store code. The processor 2502 is configured to perform the following operations by reading the code stored in the memory: obtaining a neural network graph, where the neural network graph is used to represent a neural network, the neural network graph includes a plurality of vertices, and each vertex represents a calculation unit in the neural network; and tiling the neural network graph to obtain a depth subgraph, where the depth subgraph is used to represent a depth subnetwork, a plurality of vertices included in the depth subnetwork exchange data with each other by reading and writing an on-chip buffer, the depth subnetwork is configured to successively process at least two groups of data obtained by tiling first input data, to obtain first output data, the first input data is input data of the depth subnetwork, and the first input data includes one or more signals that can be processed by a computer. The processor 2502 is configured to implement a function of the control module 401 in FIG. 4 and implement a function of the instruction mapping module 405. The processor 2502 is configured to implement a function of the connection optimization module 2302.

In an optional manner, the processor 2502 is further configured to tile the neural network graph to obtain a direct subgraph, where the direct subgraph is used to represent a direct subnetwork, a plurality of vertices included in the direct subnetwork exchange data with each other by reading and writing the on-chip buffer, the direct subnetwork is configured to process second input data as a whole to obtain second output data, and the second input data is input data of the direct subnetwork.

In an optional manner, the processor 2502 is specifically configured to: obtain a first reference subgraph, where the first reference subgraph includes a first vertex and a second vertex, the first vertex is a current to-be-allocated vertex in the neural network graph, and the second vertex is a next vertex of the first vertex in the neural network graph; and add a third vertex to the first reference subgraph to obtain a second reference subgraph, where the third vertex is a next vertex of the second vertex in the neural network graph, and the second reference subgraph is used to process third input data. The apparatus further includes:

an on-chip address manager 2403, configured to allocate an address of the on-chip buffer to the second reference subgraph in a process in which the second reference subgraph processes the third input data.

The processor 2502 is specifically configured to: when the address of the on-chip buffer is successfully allocated to the second reference subgraph and the third vertex is an end vertex, use the second reference subgraph as the depth subgraph. The processor is specifically configured to: when the address of the on-chip buffer is successfully allocated to the second reference subgraph and the third vertex is not the end vertex, add a fourth vertex to the second reference subgraph to obtain a fourth reference subgraph, where the fourth vertex is a next vertex of the third vertex in the neural network graph. The on-chip address manager 2403 is configured to implement a function of the on-chip address management module 404 in FIG. 4. The on-chip address manager 2403 may be integrated with the processor 2502, and may be an independent component.

In an optional manner, the processor 2502 is further configured to: when the address of the on-chip buffer fails to be allocated to the second reference subgraph, use the first reference subgraph as the direct subgraph.

In an optional manner, the on-chip address manager 2403 is specifically configured to allocate the address of the on-chip buffer to the second reference subgraph in a process in which the second reference subgraph processes the third input data as a whole.

The processor 2502 is specifically configured to: when the on-chip address manager fails to allocate the address of the on-chip buffer to the second reference subgraph, allocate the address of the on-chip buffer to the second reference subgraph in a process in which the second reference subgraph successively processes at least two groups of data obtained by tiling the third input data.

In an optional manner, the processor 2502 is further configured to generate a target instruction corresponding to the depth subgraph, where the target instruction is used to execute a target subtask, the neural network is configured to execute a target task, and the target subtask is a part of the target task.

FIG. 26 is a schematic diagram of a structure of a data processing apparatus according to an embodiment of this application. As shown in FIG. 26, the data processor apparatus includes a memory 2601 and a processor 2602. The memory is configured to store code and original input data. The processor is configured to perform the following operations by reading the code stored in the memory: obtaining the original input data, where the original input data includes one or more signals that can be processed by a computer; and inputting the original input data to a neural network for prediction processing to obtain a prediction result, where the prediction processing includes: successively inputting, to a depth subnetwork for processing, at least two groups of data obtained by tiling first input data, where the depth subnetwork is included in the neural network and includes a part of vertices in the neural network, each vertex represents a calculation unit in the neural network, and a plurality of vertices included in the depth subnetwork exchange data with each other by reading and writing an on-chip buffer, and the first input data is obtained in the process of inputting the original input data to the neural network for prediction processing; and outputting the prediction result.

The processor 2602 is configured to implement the method in step 2401 to step 2403 in FIG. 24 and an equivalent alternative method of step 2401 to step 2403.

The processor 2602 is further configured to: process, by a third second-order subnetwork, fourth input data to obtain second intermediate data; and store the second intermediate data into a middle buffer, where the middle buffer is not the on-chip buffer; and process, by a fourth second-order subnetwork, the second intermediate data obtained from the middle buffer to obtain fourth output data, where both the third second-order subnetwork and the fourth second-order subnetwork are included in the neural network, vertices included in the third second-order subnetwork are all different from vertices included in the fourth second-order subnetwork, and the fourth input data is obtained in the process of inputting the original input data to the neural network for prediction processing.

In an optional manner, a plurality of vertices included in the third second-order subnetwork exchange data with each other by reading and writing the on-chip buffer, and a plurality of vertices included in the fourth second-order subnetwork exchange data with each other by reading and writing the on-chip buffer.

In the embodiments of this application, the memory 2501 and the memory 2601 each may be a read-only memory (ROM), a static storage device, a dynamic storage device, or a random access memory (RAM). The memory may store an operating system and another application program.

The processor 2502 and the processor 2602 each may be a central processing unit (CPU), a microprocessor, an application-specific integrated circuit (ASIC), a GPU, or one or more integrated circuits, and is configured to execute a related program, so as to implement functions that need to be performed by units in the neural network graph tiling apparatus and/or the data processing apparatus in the embodiments of this application, or perform the neural network graph tiling method and/or the prediction method provided in the method embodiments of this application. The processor may also be an integrated circuit chip and has a signal processing capability.

In an implementation process, steps of the method provided in this application may be completed by using an integrated logic circuit of hardware in the processor or instructions in a form of software. The processor may be a general purpose processor, a digital signal processor (DSP), an application-specific integrated circuit (ASIC), a field programmable gate array (FPGA) or another programmable logical device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register.

An embodiment of this application provides a computer-readable storage medium. The computer-readable storage medium stores a computer program, and the computer program includes software program instructions. When the program instructions are executed by a processor in a data processing device, the neural network graph tiling method and/or the data processing method in the foregoing embodiments are/is implemented.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

**Claims**

1. A computer-implemented neural network tiling method, the method comprising the steps of:

   • obtaining (step 501) a neural network graph, wherein the neural network graph is used to represent a neural network, the neural network graph comprises a plurality of vertices, and each vertex represents a calculation unit in the neural network; and
   • tiling (steps 502 - 508) the neural network graph to obtain a depth subgraph, wherein the depth subgraph is used to represent a depth subnetwork, a plurality of vertices comprised in the depth subnetwork exchange data with each other by reading and writing an on-chip buffer, the depth subnetwork is configured to successively process at least two groups of data obtained by tiling first input data, to obtain first output data, the first input data is input data of the depth subnetwork, and the first input data comprises one or more signals that can be processed by a computer, wherein the depth subnetwork is a subnetwork obtained by tiling the neural network, wherein the depth subnetwork includes a part of the plurality of vertices of the neural network,

   wherein after the tiling the neural network graph to obtain the depth subgraph, the method further comprises:

   • when a quantity of vertices comprised in the depth subgraph is not less than a first threshold, tiling the depth subgraph to obtain a first second-order subgraph and a second second-order subgraph, wherein the first second-order subgraph is used to represent a first second-order subnetwork, the second second-order subgraph is used to represent a second second-order subnetwork, both the first second-order subnetwork and the second second-order subnetwork are comprised in the depth subnetwork, and vertices comprised in the first second-order subnetwork are all different from vertices comprised in the second second-order subnetwork, wherein output data of the first second-order subnetwork is stored into a middle buffer, and the second second-order subnetwork reads the data from the middle buffer, wherein the middle buffer is an off-chip buffer whose reading and writing speed is lower than that of the on-chip buffer, and the reading and writing speed of the middle buffer is faster than that of an external memory.

2. The computer-implemented neural network tiling method according to claim 1, wherein the method further comprises:

   ○ tiling the neural network graph to obtain a direct subgraph, wherein the direct subgraph is used to represent a direct subnetwork, a plurality of vertices comprised in the direct subnetwork exchange data with each other by reading and writing the on-chip buffer, the direct subnetwork is configured to process second input data as a whole to obtain second output data, and the second input data is input data of the direct subnetwork.

3. A system including:

   ○ an Artificial Intelligence, AI, chip including an on-chip buffer and a calculation unit; and
   ○ a middle buffer coupled to the AI chip,

wherein the system is configured to perform any of the methods according to any of claims 1 to 2.

4. A computer-readable storage medium, wherein the computer-readable storage medium stores a computer program, the computer program comprises program instructions, and when the program instructions are executed by a system according to claim 3, the system is caused to perform the method according to any one of claims 1 to 2.


**Patentansprüche**

1. Computerimplementiertes Verfahren zum Kacheln eines neuronalen Netzes, wobei das Verfahren die Schritte umfasst:

• Erhalten (Schritt 501) eines neuronalen Netzgraphen, wobei der neuronale Netzgraph verwendet wird, um ein neuronales Netz darzustellen, wobei der neuronale Netzgraph eine Vielzahl von Vertices umfasst, und jeder Vertex eine Berechnungseinheit in dem neuronalen Netz darstellt; und
• Kacheln (Schritte 502 - 508) des neuronalen Netzgraphen, um einen Tiefenuntergraphen zu erhalten, wobei der Tiefenuntergraph verwendet wird, um ein Tiefenunternetz darzustellen, wobei eine Vielzahl von Vertices, die in dem Tiefenunternetz enthalten sind, Daten durch Lesen und Schreiben eines On-Chip-Puffers miteinander austauschen, wobei das Tiefenunternetz konfiguriert ist, um nacheinander mindestens zwei Gruppen von Daten zu verarbeiten, die durch Kacheln erster Eingabedaten erhalten werden, um erste Ausgabedaten zu erhalten, wobei die ersten Eingabedaten Eingabedaten des Tiefenunternetzes sind, und die ersten Eingabedaten ein oder mehrere Signale, die durch einen Computer verarbeitet werden können, umfassen, wobei das Tiefenunternetz ein Unternetz, das durch Kacheln des neuronalen Netzes erhalten wird, ist, wobei das Tiefenunternetz einen Teil der Vielzahl von Vertices des neuronalen Netzwerks einschließt,

wobei das Verfahren nach dem Kacheln des neuronalen Netzgraphen, um den Tiefenuntergraphen zu erhalten, ferner umfasst:

• wenn eine Menge an Vertices, die in dem Tiefenuntergraphen enthalten ist, nicht kleiner als eine erste Schwelle ist, Kacheln des Tiefenuntergraphen, um einen ersten Untergraphen zweiter Ordnung und einen zweiten Untergraphen zweiter Ordnung zu erhalten, wobei der erste Untergraph zweiter Ordnung verwendet wird, um ein erstes Unternetz zweiter Ordnung darzustellen, wobei der zweite Untergraph zweiter Ordnung verwendet wird, um ein zweites Unternetz zweiter Ordnung darzustellen, sowohl das erste Unternetz zweiter Ordnung als auch das zweite Unternetz zweiter Ordnung in dem Tiefenunternetz enthalten sind, und die Vertices, die in dem ersten Unternetz zweiter Ordnung enthalten sind, sich alle von den Vertices, die in dem zweiten Unternetz zweiter Ordnung enthalten sind, unterscheiden, wobei Ausgabedaten des ersten Unternetzes zweiter Ordnung in einem mittleren Puffer gespeichert werden, und das zweite Unternetz zweiter Ordnung die Daten aus dem mittleren Puffer liest, wobei der mittlere Puffer ein Off-Chip-Puffer ist, dessen Lese- und Schreibgeschwindigkeit geringer als die des On-Chip-Puffers ist, und die Lese- und Schreibgeschwindigkeit des mittleren Puffers schneller als die eines externen Speichers ist.

2. Computerimplementiertes Verfahren zum Kacheln eines neuronalen Netzes nach Anspruch 1, wobei das Verfahren ferner umfasst:

o Kacheln des neuronalen Netzgraphen, um einen direkten Untergraphen zu erhalten, wobei der direkte Untergraph verwendet wird, um ein direktes Unternetz darzustellen, wobei eine Vielzahl von Vertices, die in dem direkten Unternetz enthalten sind, Daten durch Lesen und Schreiben des On-Chip-Puffers miteinander austauschen, das direkte Unternetz konfiguriert ist, um zweite Eingabedaten als ein Ganzes zu verarbeiten, um zweite Ausgabedaten zu erhalten, und die zweiten Eingabedaten Eingabedaten des direkten Unternetzes sind.

3. System, das einschließt:

◦ einen Künstliche-Intelligenz(AI)-Chip, einschließlich eines On-Chip-Puffers und einer Berechnungseinheit; und
◦ einen mittleren Puffer, der mit dem AI-Chip gekoppelt ist,

wobei das System konfiguriert ist, um ein beliebiges der Verfahren nach einem der Ansprüche 1 bis 2 durchzuführen.

4. Computerlesbares Speicherungsmedium, wobei das computerlesbare Speicherungsmedium ein Computerprogramm speichert, das Computerprogramm Programmanweisungen umfasst, und wenn die Programmanweisungen durch ein System nach Anspruch 3 ausgeführt werden, das System veranlasst wird, das Verfahren nach einem der Ansprüche 1 bis 2 durchzuführen.

## Revendications

1. Procédé de pavage de réseau neuronal mis en oeuvre par ordinateur, le procédé comprenant les étapes consistant à :

   • obtenir (étape 501) un graphe de réseau neuronal, dans lequel le graphe de réseau neuronal est utilisé pour représenter un réseau neuronal, le graphe de réseau neuronal comprend une pluralité de sommets, et chaque sommet représente une unité de calcul dans le réseau neuronal ; et
   • paver (étapes 502 à 508) le graphe de réseau neuronal pour obtenir un sous-graphe de profondeur, dans lequel le sous-graphe de profondeur est utilisé pour représenter un sous-réseau de profondeur, une pluralité de sommets compris dans le sous-réseau de profondeur échangent des données entre eux par lecture et écriture d'une mémoire tampon sur puce, le sous-réseau de profondeur est configuré pour traiter successivement au moins deux groupes de données obtenus par pavage de premières données d'entrée, pour obtenir des premières données de sortie, les premières données d'entrée sont des données d'entrée du sous-réseau de profondeur, et les premières données d'entrée comprennent un ou plusieurs signaux qui peuvent être traités par un ordinateur, dans lequel le sous-réseau de profondeur est un sous-réseau obtenu par pavage du réseau neuronal, dans lequel le sous-réseau de profondeur comporte une partie de la pluralité de sommets du réseau neuronal,

   dans lequel, après le pavage du graphe de réseau neuronal pour obtenir le sous-graphe de profondeur, le procédé comprend en outre :

   • lorsqu'une quantité de sommets compris dans le sous-graphe de profondeur n'est pas inférieure à un premier seuil, le pavage du sous-graphe de profondeur pour obtenir un premier sous-graphe de second ordre et un second sous-graphe de second ordre, dans lequel le premier sous-graphe de second ordre est utilisé pour représenter un premier sous-réseau de second ordre, le second sous-graphe de second ordre est utilisé pour représenter un second sous-réseau de second ordre, à la fois le premier sous-réseau de second ordre et le second sous-réseau de second ordre sont compris dans le sous-réseau de profondeur, et les sommets compris dans le premier sous-réseau de second ordre sont tous différents des sommets compris dans le second sous-réseau de second ordre, dans lequel des données de sortie du premier sous-réseau de second ordre sont stockées dans une mémoire tampon intermédiaire, et le second sous-réseau de second ordre lit les données à partir de la mémoire tampon intermédiaire, dans lequel la mémoire tampon intermédiaire est une mémoire tampon hors puce dont la vitesse de lecture et d'écriture est inférieure à celle de la mémoire tampon sur puce, et la vitesse de lecture et d'écriture de la mémoire tampon intermédiaire est plus rapide que celle d'une mémoire externe.

2. Procédé de pavage de réseau neuronal mis en oeuvre par ordinateur selon la revendication 1, dans lequel le procédé comprend en outre :

   ◦ le pavage du graphe de réseau neuronal pour obtenir un sous-graphe direct, dans lequel le sous-graphe direct est utilisé pour représenter un sous-réseau direct, une pluralité de sommets compris dans le sous-réseau direct échangent des données entre eux par lecture et écriture de la mémoire tampon sur puce, le sous-réseau direct est configuré pour traiter des secondes données d'entrée dans leur ensemble afin d'obtenir des secondes données de sortie, et les secondes données d'entrée sont des données d'entrée du sous-réseau direct.

3. Système comportant :

   ◦ une puce d'intelligence artificielle, IA, comportant une mémoire tampon sur puce et une unité de calcul ; et
   ◦ une mémoire tampon intermédiaire couplée à la puce d'IA,

   dans lequel le système est configuré pour effectuer l'un quelconque des procédés selon l'une quelconque des revendications 1 à 2.

4. Support de stockage lisible par ordinateur, dans lequel le support de stockage lisible par ordinateur stocke un programme informatique, le programme informatique comprend des instructions de programme, et lorsque les instructions de programme sont exécutées par un système selon la revendication 3, le système est amené à réaliser le procédé selon l'une quelconque des revendications 1 à 2.

FIG. 1

Calculation instruction     Calculation instruction     Calculation instruction
pipeline 0 of a depth       pipeline 1 of a depth       pipeline 2 of a depth
       subgraph                    subgraph                    subgraph

Input data 0@DDR          Input data 1@DDR          Input data 2@DDR

201                       201                       201

1                         1                         1

Data                      Data                      Data
10@buffer                 11@buffer                 12@buffer

2                         2                         2

Output data
20@buffer

Output data
21@buffer

Output data
22@buffer

AI chip

3

202

Data
3@buffer

Calculation instruction
pipeline 0 of a direct
subgraph

Calculation          On-chip
unit                 buffer

4

Input        Output

DDR

Output data@DDR

FIG. 2

FIG. 3A

On-chip address management

Subgraphs
with different
sizes

Subgraphs with
different sizes
of input/output
output data

Subgraphs with a
fixed size of input/
output data

Whether a
mark can be
allocated

Whether a
mark can be
allocated

On-chip address
allocation
mapping table

Neural network
graph

Direct subgraph

Whether to
perform graph
tiling

Yes

Graph
tiling

Subgraph

No

Data tiling

Yes

Data
tiling

On-chip address
allocation

Depth subgraph

Depth subgraph+
calculation
instruction pipeline

Depth subgraph+
calculation instruction
pipeline+
on-chip address
mapping

Yes

No        Depth subgraph

Whether a depth is
greater than a first
threshold

Second-order subgraph

Select a reference
vertex

Calculate a depth difference
corresponding to each
reference vertex

Determine a tiling
solution

FIG. 3B

FIG. 4

501

Obtain a neural network graph

502

Whether
traversal of all vertices is
completed

No

503

Use a current vertex as a start
vertex in a reference subgraph

504

Whether the current
vertex is a last vertex? — Yes

No

505

Add a next vertex in the
current vertex to the reference
subgraph

506

Whether data tiling is
successfully performed?

Yes

No

507

Use a direct mode to
construct a subgraph

508

Use a depth mode to
construct a subgraph

Yes

TO
FIG. 5B

TO
FIG. 5B

TO
FIG. 5B

FIG. 5A

CONT.
FROM
FIG. 5A

CONT.
FROM
FIG. 5A

CONT.
FROM
FIG. 5A

509

Determine whether
subgraph construction
succeeds?

No → 512 Return a tiling failure?

Yes

510

Output a subgraph and address
allocation information

511

Update a next vertex in the
subgraph as a start vertex in
a next reference subgraph

513

Output all subgraphs and
address allocation information

FIG. 5B

FIG. 6

701

Obtain a reference subgraph

702

Whether to allocate
an address

No

Yes

703

Allocate an address to output data of the
reference subgraph

704

Whether to allocate
an address

No

Yes

705

Allocate an address to input/output data inside the
reference subgraph

706

Recycle addresses allocated to the
reference subgraph

707

Reset an on-chip address
management module

TO
FIG. 7B

TO
FIG. 7B

FIG. 7A

CONT.
FROM
FIG. 7A

CONT.
FROM
FIG. 7A

708

Whether to
allocate an address

No

Yes

709

Allocate an address to output data
of the reference subgraph

710

Tile input data of the reference subgraph
according to a tiling rule

711

Perform on-chip address allocation
after data tiling

712

Whether allocation
succeeds?

No

713

Return "not support"

714

Output an address allocation
result of the reference graph

Yes

FIG. 7B

801

Input a reference subgraph

802

Expand the reference subgraph by one vertex

803

Perform data tiling determining

804

Whether data tiling is successfully performed?

No

Yes

805

Whether input data of the reference subgraph is tiled

No

Yes

806

Generate a subgraph

FIG. 8

FIG. 9

FIG. 10

Input data

FIG. 11A

Output data

FIG. 11B

1201

Obtain a current vertex in a subgraph

1202

Whether the current vertex is a last vertex

Yes

No

1203

Recycle an edge corresponding to a current releasable on-chip address

1204

Obtain an output edge of the current vertex

1205

Yes

Whether the output edge of the current vertex is an output edge of the subgraph

No

TO
FIG. 12B

TO
FIG. 12B

TO
FIG. 12B

FIG. 12A

CONT.
FROM
FIG. 12A

CONT.
FROM
FIG. 12A

CONT.
FROM
FIG. 12A

1206

Allocate an on-chip address to the current output edge

1207

Whether the address is successfully allocated

No

Yes

1208

Record a processed vertex

1209

Record a processed edge

1210

Release all allocated edges

FIG. 12B

1301

Obtain a current edge of a subgraph

1302

Whether the current edge is an output edge of the subgraph

Yes

No

1303

Release the current edge

FIG. 13

1401

A neural network graph tiling apparatus determines an optimal discrete block that is in an on-chip buffer and that can currently store to-be-stored data

1402

A neural network graph tiling apparatus determines an optimal discrete block that is in an on-chip buffer and that can currently store to-be-stored data

FIG. 14

1501

Obtain an optimal discrete
block

1502

Sort current total discrete address storage (an
available discrete block and an occupied
discrete block) in ascending order of base
addresses

1503

Whether the total
discrete address storage is
complete?

No

1504

Whether the optimal discrete
block is located at two ends of
an on-chip
address?

No

1508

Whether a forward
address block is input of a
current vertex?

Yes

Yes

Yes

No

TO
FIG. 15B

TO
FIG. 15B

TO
FIG. 15B

TO
FIG. 15B

FIG. 15A

CONT.
FROM
FIG. 15A

CONT.
FROM
FIG. 15A

CONT.
FROM
FIG. 15A

CONT.
FROM
FIG. 15A

1509

Low address of the
optimal discrete block

1505

Whether to-be-stored
data occupies an
on-chip address for
long time?

1510

High address of the
optimal discrete block

No

1511

Select the low
address of the
optimal
discrete block

Yes

1507

Select an address away
from two ends of the
on-chip address

1506

Select an address
close to the two ends
of the on-chip address

1512

Obtain an allocated address

FIG. 15B

1/4 of input data     1/4 of input data     1/4 of input data     1/4 of input data

1        1        1        1

Data 11@on-chip buffer    Data 12@on-chip buffer    Data 13@on-chip buffer    Data 14@on-chip buffer

2        2        2        2

Data 21@on-chip buffer    Data 22@on-chip buffer    Data 23@on-chip buffer    Data 24@on-chip buffer

3        3        3        3

Data 31@on-chip buffer    Data 32@on-chip buffer    Data 33@on-chip buffer    Data 34@on-chip buffer

4        4        4        4

Data 41@on-chip buffer    Data 42@on-chip buffer    Data 43@on-chip buffer    Data 44@on-chip buffer

5        5        5        5

Data 51@on-chip buffer      Data 53@on-chip buffer

Data 52@on-chip buffer      Data 54@on-chip buffer

6

FIG. 16A

1/2 of input data      1/2 of input data

( 1 )         ( 1 )

@on-chip buffer     @on-chip buffer

( 2 )         ( 2 )

@on-chip buffer     @on-chip buffer

( 3 )         ( 3 )

@middle buffer

@middle buffer

( 4 )

@on-chip buffer

( 5 )

@on-chip buffer

( 6 )

**AI chip**

| Calculation unit | ⇄ | On-chip buffer |

Input    Middle buffer    Output

DDR

FIG. 16B

Base address

1601

1602

1603

End address

FIG. 17

Connection
optimization
module
1801

Control module
401

Graph tiling
module
402

Data tiling
module
403

On-chip
address
management
module
404

Instruction
mapping
module
405

FIG. 18

FIG. 19

FIG. 20

FIG. 21

FIG. 22

**401**

**2302**

Connection optimization module

**402**
Graph tiling module

**403**
Data tiling module

**404**
On-chip address management module

**405**
Instruction mapping module

**2101**
Discovery output optimization module

Control module

FIG. 23

**2401**
A data processing apparatus obtains original input data

**2402**
The data processing apparatus inputs the original input data to a neural network for prediction processing to obtain a prediction result

**2403**
The data processing apparatus outputs the prediction result

FIG. 24

Neural network graph tiling apparatus

| Memory 2501 | Processor 2502 |

On-chip address
manager 2503

FIG. 25

Data processing apparatus

| Memory 2601 | Processor 2602 |

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XING YU et al.** *DNNVM: End-to-End Compiler Leveraging Heterogeneous Optimizations on FPGA-Based CNN Accelerators*